# EUROPEAN PATENT APPLICATION

(11) **EP 4 502 284 A1**
(43) Date of publication of application: **05.02.2025**
(21) Application number: 23779594.3
(22) Date of filing: 15.03.2023
(51) Int. Cl.: E02F 9/00

(54) **WORK MACHINE**

(30) Priority: 31.03.2022 JP 2022060021
(71) Applicant: KUBOTA CORPORATION, Osaka-shi, Osaka 556-8601 (JP)
(72) Inventor: ITO, Junki, Sakai-shi, Osaka 590-0908 (JP)
(74) Representative: Cabinet Beau de Loménie
(86) International application number: PCT/JP2023/009988
(87) International publication number: WO 2023/189576

(57) **Abstract**

Whining noise is prevented by simple fan control.

A swivel working machine (1) includes a radiator fan (94a) (first cooling fan), an oil cooler fan (97a) (second cooling fan), a temperature detector (TD) to detect a temperature of a to-be-cooled target, a storage and/or a memory (121) to store first data defining a correspondence relationship between the temperature detected by the temperature detector (TD) and a first target rotational speed which is a target rotational speed of the radiator fan (94a), and second data defining a correspondence relationship between the temperature detected by the temperature detector (TD) and a second target rotational speed which is a target rotational speed of the oil cooler fan (97a), and a controller (120) to control a rotational speed of the radiator fan (94a) to the first target rotational speed corresponding to the temperature detected by the temperature detector (TD) and control a rotational speed of the oil cooler fan (97a) to the second target rotational speed corresponding to the temperature detected by the temperature detector (TD), and the second target rotational speed is set such that a difference between the second target rotational speed and the first target rotational speed is equal to or larger than a predetermined difference irrespective of the temperature detected by the temperature detector (TD).

## Description

### Technical Field

The present invention relates to a working machine such as a backhoe.

### Background Art

A swivel working machine disclosed in Patent Literature 1 includes a first cooling fan for cooling a first to-be-cooled target, a second cooling fan for cooling a second to-be-cooled target, and a controller, and the controller rotates the first cooling fan at a target rotational speed according to a temperature of the first to-be-cooled target and rotates the second cooling fan at a target rotational speed according to a temperature of the second to-be-cooled target. For example, in a case where the two cooling fans rotate at rotational speeds that are close (i.e., rotational speeds having less than a predetermined difference), vibrations of the cooling fans are combined, and whine noise is generated.

In view of this, in the swivel working machine disclosed in Patent Literature 1, the controller determines whether or not a difference between the target rotational speeds of the first and second cooling fans is less than a predetermined difference, and in a case where it is determined that the difference is less than the predetermined difference, the controller changes the target rotational speeds of the first and second cooling fans so that the target rotational speeds of the first and second cooling fans become equal to or higher than the target rotational speeds and the difference between the target rotational speeds of the first and second cooling fans becomes equal to or larger than the predetermined difference, and thus prevents generation of whine noise.

### Citation List

### Patent Literature

PTL 1: Japanese Unexamined Patent Application Publication No. 2016-50428

### Summary of Invention

### Technical Problem

The swivel working machine of Patent Literature 1 has a problem that the control for changing the target rotational speeds of the first and second cooling fans to prevent whine noise is complicated and the changing control imposes a burden on the controller.

The present invention was accomplished to solve such a problem of the conventional art, and an object of the present invention is to provide a working machine that can prevent whine noise by simple fan control.

### Solution to Problem

A working machine according to an aspect of the present invention includes a first cooling fan, a second cooling fan, a temperature detector to detect a temperature of a to-be-cooled target, a storage and/or a memory to store first data defining a correspondence relationship between the temperature detected by the temperature detector and a first target rotational speed, which is a target rotational speed of the first cooling fan, and second data defining a correspondence relationship between the temperature detected by the temperature detector and a second target rotational speed, which is a target rotational speed of the second cooling fan, and a controller to control a rotational speed of the first cooling fan to the first target rotational speed corresponding to the temperature detected by the temperature detector and control a rotational speed of the second cooling fan to the second target rotational speed corresponding to the temperature detected by the temperature detector, in which the second target rotational speed is set such that a difference between the second target rotational speed and the first target rotational speed is equal to or larger than a predetermined difference irrespective of the temperature detected by the temperature detector.

The first cooling fan may be provided to cool a first to-be-cooled target, and the second cooling fan may be provided to cool a second to-be-cooled target different from the first to-be-cooled target, the temperature detector may include a first temperature detector to detect a temperature of the first to-be-cooled target, and a second temperature detector to detect a temperature of the second to-be-cooled target, and the first data may define a correspondence relationship between the temperature detected by the first temperature detector and the first target rotational speed, and the second data may define a correspondence relationship between the temperature detected by the second temperature detector and the second target rotational speed.

The first data may be a storage table or an arithmetic expression in which the first target rotational speed is defined in advance for each of a plurality of temperature ranges of the first to-be-cooled target, and the second data may be a storage table or an arithmetic expression in which the second target rotational speed is defined in advance for each of a plurality of temperature ranges of the second to-be-cooled target, and the controller may determine one of the temperature ranges of the first to-be-cooled target to which the temperature detected by the first temperature detector belongs and rotate the first cooling fan at the first target rotational speed corresponding to the determined one of the temperature ranges, and determine one of the temperature ranges of the second to-be-cooled target to which the temperature detected by the second temperature detector belongs and rotate the second cooling fan at the second target rotational speed corresponding to the determined one of the temperature ranges.

The second data may be defined such that the second target rotational speed continuously increases as the temperature detected by the second temperature detector increases with regard to one of the temperature ranges of the second to-be-cooled target to which the second target rotational speed higher than a maximum value of the first target rotational speed belongs.

The first cooling fan and the second cooling fan may be provided to cool the same to-be-cooled target.

The working machine may include a battery unit, and a detector to detect whether the battery unit is in a charged state or in a discharged state, and the controller may, in a case where the detector is detecting the charged state of the battery unit, rotate the first cooling fan at a predetermined first specified rotational speed and rotate the second cooling fan at a predetermined second specified rotational speed differing by a predetermined difference or more from the first specified rotational speed.

The working machine may include a temperature detector to detect a temperature of the battery unit, and the controller may, while the detector is detecting the charged state of the battery unit, rotate the first cooling fan at the first specified rotational speed and rotate the second cooling fan at the second specified rotational speed if the temperature of the battery unit detected by the temperature detector is equal to higher than a set temperature and not drive the first cooling fan or the second cooling fan if the temperature of the battery unit is less than the set temperature.

The working machine may include a cooling unit including a frame body, the first cooling fan and the second cooling fan attached side by side to one surface of the frame body, and a shroud surrounding the first cooling fan and the second cooling fan which are combined.

The shroud may include a first elastic support body to support the first cooling fan and a second elastic support body to support the second cooling fan.

The shroud may be in a rectangular tube shape to surround both the first cooling fan and the second cooling fan, and include a fixing portion including an upper edge portion, a left edge portion, a lower edge portion, and a right edge portion and a guide portion extending from the fixing portion outward toward an exhaust side and guides cooling air generated by driving of the first cooling fan and cooling air generated by driving of the second cooling fan, the lower edge portion may include a first cutout portion in a portion to support the first cooling fan and a second cutout portion in a portion to support the second cooling fan, and the first elastic support body may be provided in the first cutout portion, and the second elastic support body may be provided in the second cutout portion.

The working machine may include a receiver to receive an instruction to change the predetermined difference, and the controller may change at least one of the first data or the second data stored in the storage and/or the memory in response to the instruction received by the receiver.

The working machine may include a working device to be driven by hydraulic pressure, and a water cooling path to cool a to-be-cooled device by circulating cooling water, and the first cooling fan may be a radiator fan to cool the cooling water, and the second cooling fan may be an oil cooler fan to cool a hydraulic fluid to drive the working device. Advantageous Effects of Invention

According to the working machine, it is possible to prevent whine noise by simple fan control.

### Brief Description of Drawings

[FIG. 1] FIG. 1 a schematic side view illustrating a swivel working machine.
[FIG. 2] FIG. 2 is a schematic plan view illustrating the swivel working machine.
[FIG. 3] FIG. 3 is a schematic back view illustrating the swivel working machine.
[FIG. 4] FIG. 4 is a block diagram illustrating a system of the swivel working machine.
[FIG. 5] FIG. 5 is a rear right perspective view illustrating a swivel base, a battery unit, electric components, and a cooling unit.
[FIG. 6] FIG. 6 is a rear right perspective view illustrating the swivel base, a protection mechanism, and an exterior cover.
[FIG. 7] FIG. 7 is an exploded perspective view of the cooling unit.
[FIG. 8] FIG. 8 illustrates the cooling unit viewed from an exhaust side.
[FIG. 9] FIG. 9 is a plan view of the cooling unit.
[FIG. 10] FIG. 10 illustrates the cooling unit viewed from an air intake side.
[FIG. 11] FIG. 11 is a perspective view illustrating an oil cooler and a radiator that have been attached to a frame body of the cooling unit.
[FIG. 12] FIG. 12 illustrates a control map showing that a radiator fan is rotated at a predetermined first target rotational speed in accordance with a temperature of the cooling water.
[FIG. 13] FIG. 13 illustrates a control map showing that an oil cooler fan is rotated at a predetermined second target rotational speed having a predetermined difference or more from the first target rotational speed in accordance with a temperature of a hydraulic fluid.
[FIG. 14] FIG. 14 illustrates storage tables stored in a storing unit.
[FIG. 15] FIG. 15 is a perspective view illustrating a shroud.
[FIG. 16] FIG. 16 is a horizontal cross-sectional view of the shroud.
[FIG. 17] FIG. 17 illustrates a water cooling path for the radiator.
[FIG. 18] FIG. 18 is a flowchart illustrating processing for controlling a radiator fan and an oil cooler fan.
[FIG. 19] FIG. 19 is a flowchart illustrating control processing according to the first variation.
[FIG. 20] FIG. 20 illustrates an example of a screen for changing a predetermined difference.
[FIG. 21] FIG. 21 illustrates changed storage tables stored in the storing unit. Description of Embodiments

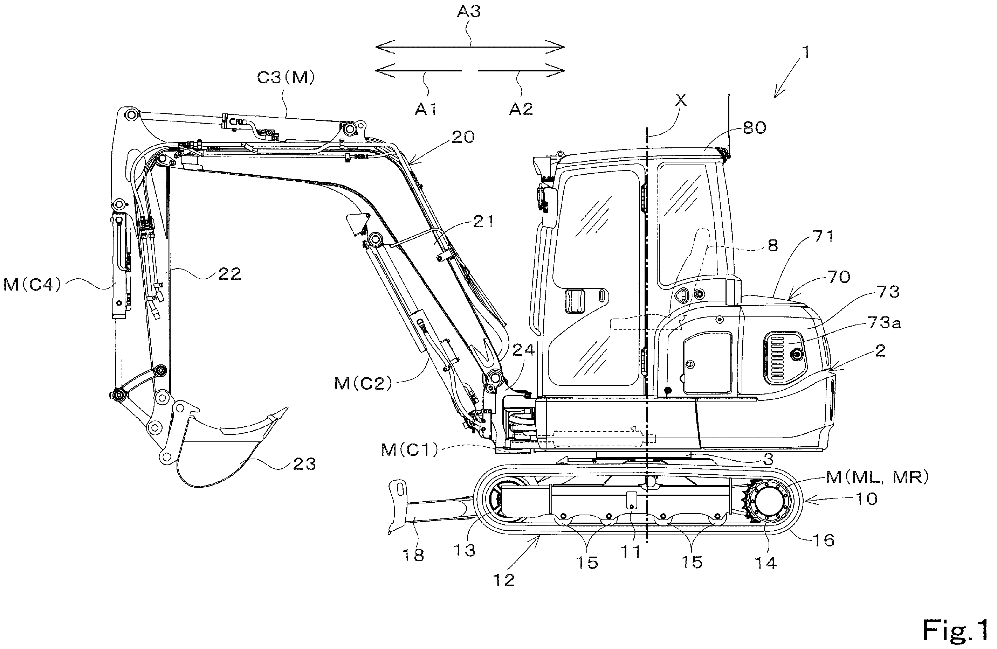

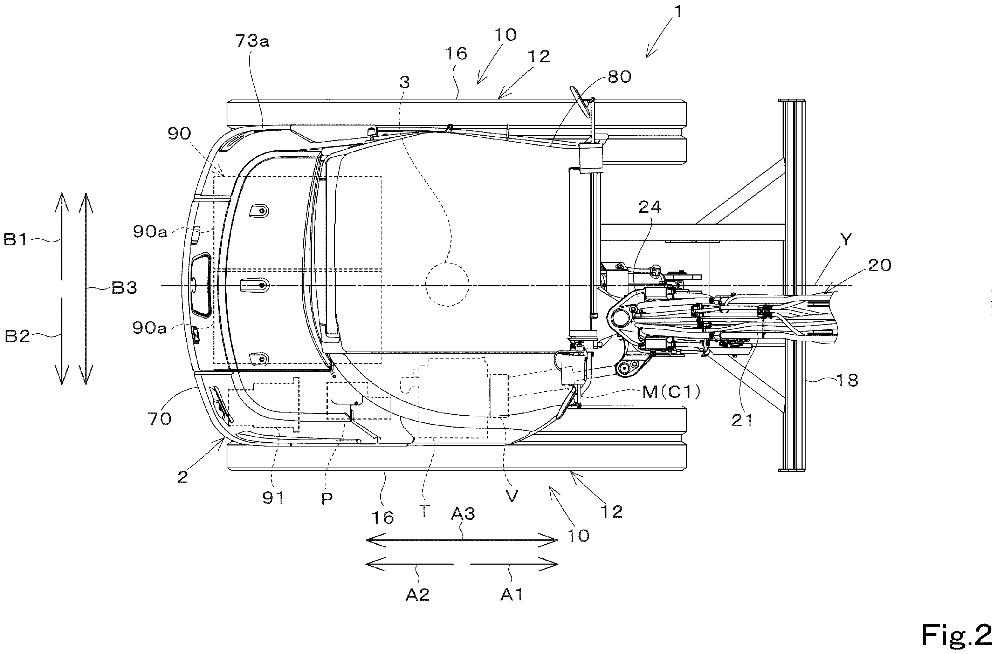

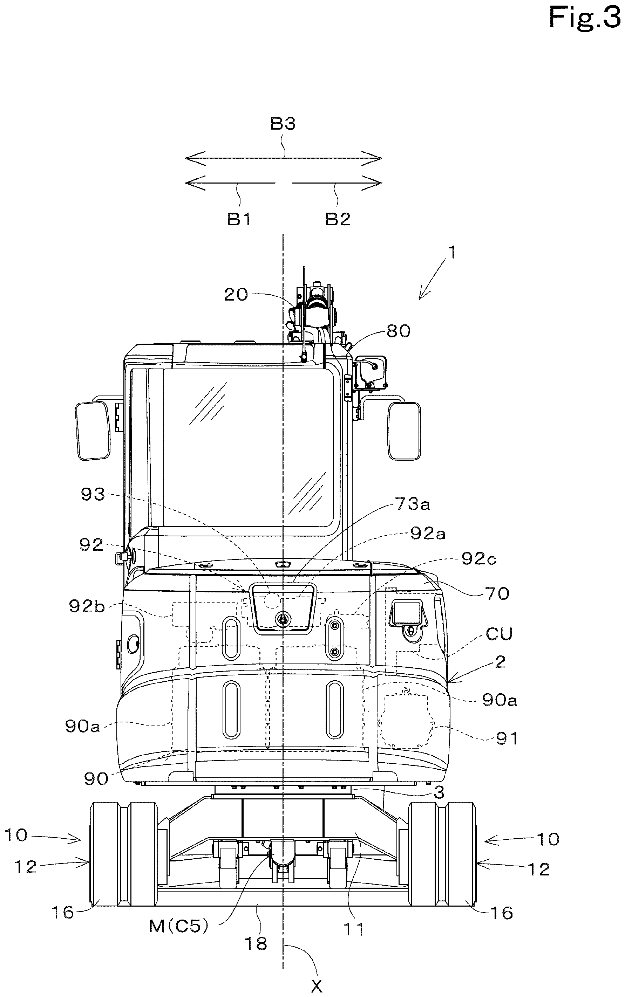

An embodiment of the present invention is described below with reference to the drawings. FIG. 1 is a schematic side view illustrating a swivel working machine 1. FIG. 2 is a schematic plan view illustrating the swivel working machine 1. FIG. 3 is a schematic back view illustrating the swivel working machine 1. First, an overall configuration of the swivel working machine 1 is described. As illustrated in FIG. 1, the swivel working machine 1 (working machine) is a backhoe or the like that includes a swivel base (machine body) 2, a lower traveling body 10, and a working device 20. The swivel working machine 1 is an electric working machine that is driven by electric power. An operator's seat 8 on which an operator sits is provided on the swivel base 2. The operator's seat 8 is, for example, covered with a protection mechanism 80 such as a cabin.

In the present embodiment, a direction (a direction indicated by arrow A1 in FIGS. 1 and 2 and other drawings) in which the operator sitting on the operator's seat 8 of the swivel working machine 1 faces is referred to as a forward direction, an opposite direction (a direction indicated by arrow A2 in FIGS. 1 and 2 and other drawings) is referred to as a rearward direction, a left side as viewed from the operator (a near side in FIG. 1, a direction indicated by arrow B1 in FIGS. 2 and 3 and other drawings) is referred to as a leftward direction, and a right side as viewed from the operator (a far side in FIG. 1, a direction indicated by arrow B2 in FIGS. 2 and 3 and other drawings) is referred to as a rightward direction. Furthermore, a horizontal direction orthogonal to a front-rear direction A3 is referred to as a width direction B3 (see FIGS. 2 and 3). A direction pointing rightward or leftward from a central portion in the width direction B3 of the swivel base 2 is referred to as an outward direction in the width direction. An operating device 5 that can be operated is provided around the operator's seat 8, and the swivel working machine 1 is operated by operating the operating device 5.

The swivel base 2 is rotatable about a swivel axis (vertical axis) X extending in an up-down direction. Specifically, the swivel base 2 is supported on the lower traveling body 10 with a swivel bearing 3 interposed therebetween so as to be rotatable (capable of swiveling leftward and rightward) about the swivel axis X1. A center of the swivel bearing 3 is the swivel axis X (swivel center), and a swivel motor (not illustrated), which will be described later, is attached to the swivel base 2. This swivel motor is hydraulic equipment M that is driven by a hydraulic fluid delivered by the hydraulic pump P and is a motor that drives the swivel base 2 to rotate about the swivel axis X. An exterior cover (cover) 70, a bracket, a stay, and the like are provided on the swivel base 2. The exterior cover 70 forms, in a rear portion of the swivel base 2, a space (rear room R) where devices, tanks, other components, and the like are provided. The bracket, the stay, and the like are members to which the above components and the like are attached.

As illustrated in FIGS. 1 and 2, the lower traveling body 10 includes a traveling frame 11 and a traveling mechanism 12. The traveling frame (truck frame) 11 is a structure to which the traveling mechanism 12 is attached and on which the swivel base 2 is supported.

The traveling mechanism 12 is, for example, a crawler type. The traveling mechanism 12 includes an idler 13, a drive wheel 14, a plurality of track rollers 15, an endless crawler belt 16, and traveling system hydraulic equipment M (traveling motors ML and MR) that is driven by a hydraulic fluid delivered by the hydraulic pump P. The traveling motors ML and MR are hydraulic motors and circulate the crawler belt 16 in a circumferential direction by driving the drive wheel 14. A dozer device 18 that is driven up and down by extension and retraction of a dozer cylinder C5 (M), which is a hydraulic cylinder (hydraulic actuator), is attached to a front portion of the lower traveling body 10.

As illustrated in FIGS. 1 and 2, the working device 20 is provided on a front portion of the swivel base 2. As illustrated in FIG. 1, the working device 20 includes a boom 21, an arm 22, and a bucket (working tool) 23. A base end portion of the boom 21 is pivotally attached to a swing bracket 24 so as to be rotatable about a horizontal axis (an axis extending in the width direction B3), and the boom 21 is swingable in the up-down direction (vertical direction). The arm 22 is pivotally attached to a front end portion of the boom 21 so as to be rotatable about the horizontal axis, and the arm 22 is swingable in the front-rear direction or the up-down direction. The bucket 23 is provided on a front end portion of the arm 22 so as to be capable of performing a shoveling action and a dumping action. Instead of or in addition to the bucket 23, another working tool (hydraulic attachment) that can be driven by a hydraulic fluid can be attached to the swivel working machine 1. Examples of such a working tool include a hydraulic breaker, a hydraulic crusher, an angle broom, an earth auger, a pallet fork, a sweeper, a mower, and a snow blower.

As illustrated in FIG. 1, the swivel working machine 1 includes working system hydraulic equipment M that operates by a hydraulic fluid delivered by the hydraulic pump P, and the working device 20 is driven by operation of the working system hydraulic equipment M. In the present embodiment, the hydraulic equipment M includes a swing cylinder C1, a boom cylinder C2, an arm cylinder C3, and a bucket cylinder C4. The swing cylinder C1, the boom cylinder C2, the arm cylinder C3, and the bucket cylinder C4 are hydraulic cylinders (hydraulic actuators). As illustrated in FIG. 1, the swing bracket 24 is swingable by extension and retraction of the swing cylinder C1 provided on a right portion of the swivel base 2. The boom 21 is swingable by extension and retraction of the boom cylinder C2. The arm 22 is swingable by extension and retraction of the arm cylinder C3. The bucket 23 is capable of performing a shoveling action and a dumping action by extension and retraction of the bucket cylinder C4.

Accordingly, the hydraulic equipment M provided in the swivel working machine 1 is the swivel motor, the traveling motors ML and MR, the swing cylinder C1, the boom cylinder C2, the arm cylinder C3, and the bucket cylinder C4. Furthermore, the hydraulic equipment M includes a control valve V that controls the hydraulic cylinders and a hydraulic fluid tank T. As illustrated in FIG. 2, the hydraulic fluid tank T and the control valve V are provided forward of the hydraulic pump P.

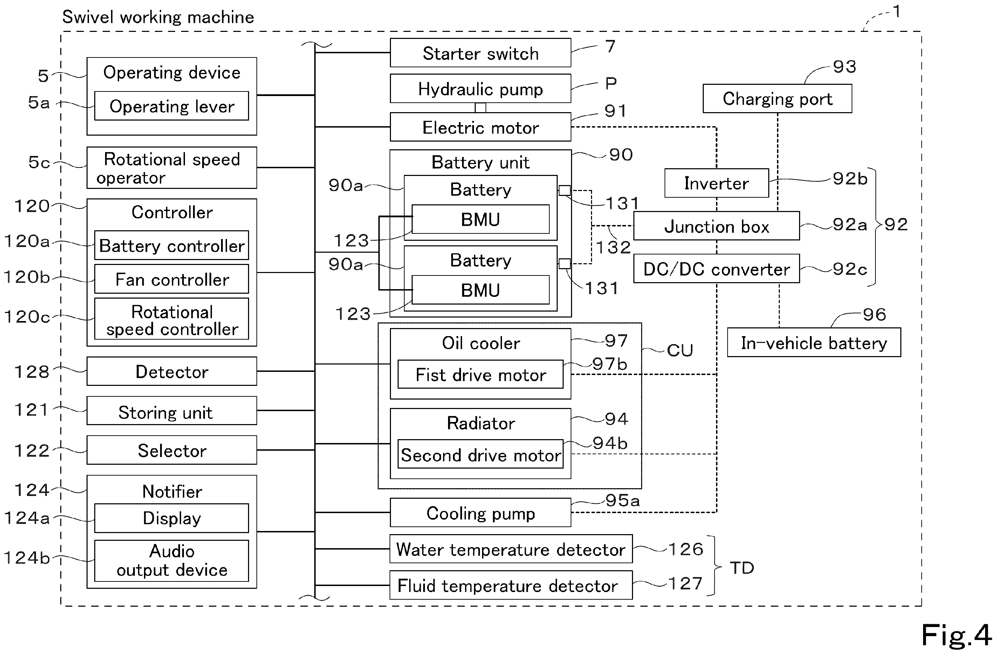

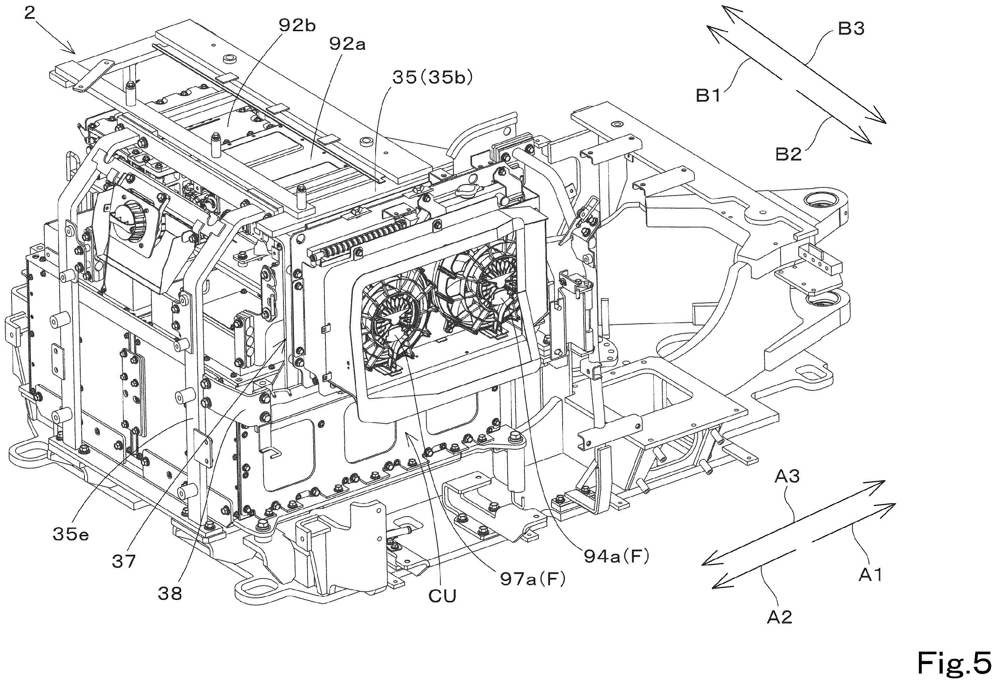

FIG. 4 is a block diagram illustrating a system of the swivel working machine 1. FIG. 5 is a rear right perspective view illustrating the swivel base 2, a battery unit 90, electric components 92, and a cooling unit CU. As illustrated in FIG. 4, the swivel working machine 1 includes the battery unit 90, an electric motor 91, the electric components 92, a charging port 93, and the cooling unit CU. As illustrated in FIG. 5, the battery unit 90, the electric motor 91, the electric components 92, the charging port 93, and the cooling unit CU are provided on the swivel base 2.

The battery unit 90 is an electric device that can accumulate electric power and outputs the accumulated electric power.

The electric motor 91 is a drive source that is driven by electric power output by the battery unit 90. The electric motor 91 is an interior permanent magnet three-phase AC synchronous motor. A rotational speed of the electric motor 91 is, for example, operated by a rotational speed operator 5c. The rotational speed operator 5c can set a range of a motor rotational speed of the electric motor 91 in a case where the motor rotational speed of the electric motor 91 is set in accordance with a current value that changes in response to operation of the operating device 5. The rotational speed operator 5c is, for example, a dial-type switch such as a selector switch having a plurality of switch positions, and a target value of the rotational speed of the electric motor 91 is allocated to each of the plurality of switch positions. The rotational speed operator 5c can be operated to set a range of the target value of the rotational speed of the electric motor 91, for example, within a range of 1500 rpm/min to 2600 rpm/min. Note that the electric motor 91 may be a synchronous motor of a different kind, and may be an AC motor or may be a DC motor. The rotational speed of the electric motor 91 may be operated based on a preset table in accordance with an operation amount of the operating device 5.

The electric motor 91 rotates a drive shaft upon supply of electric power from the battery unit 90, and driving force is transmitted from the drive shaft to the hydraulic pump P. The hydraulic pump P is coupled to the drive shaft of the electric motor 91 and is driven by the driving force transmitted from the drive shaft. That is, the hydraulic pump P is driven by driving of the electric motor 91 and thus delivers a hydraulic fluid.

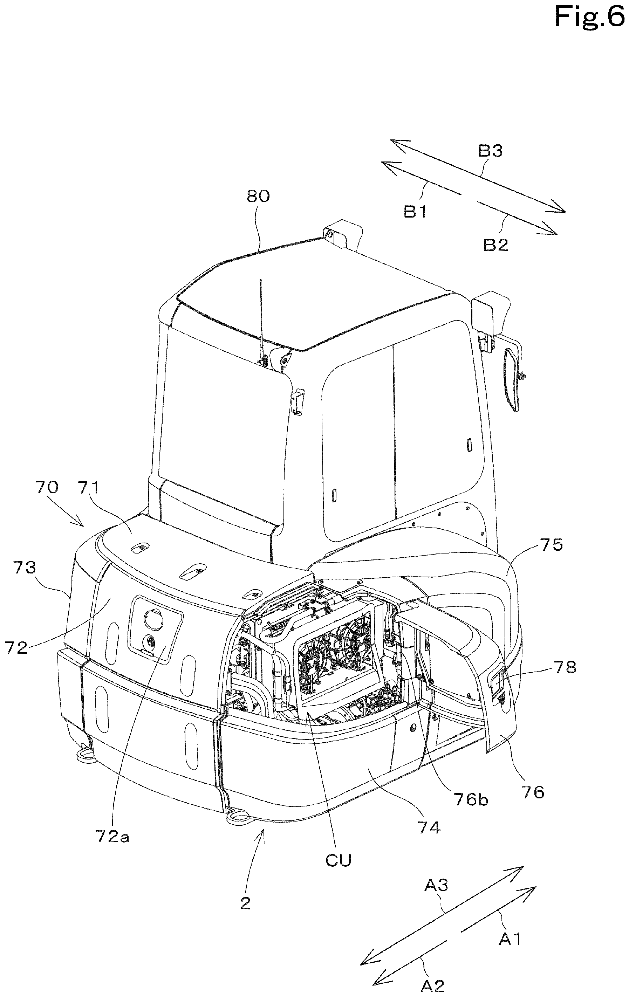

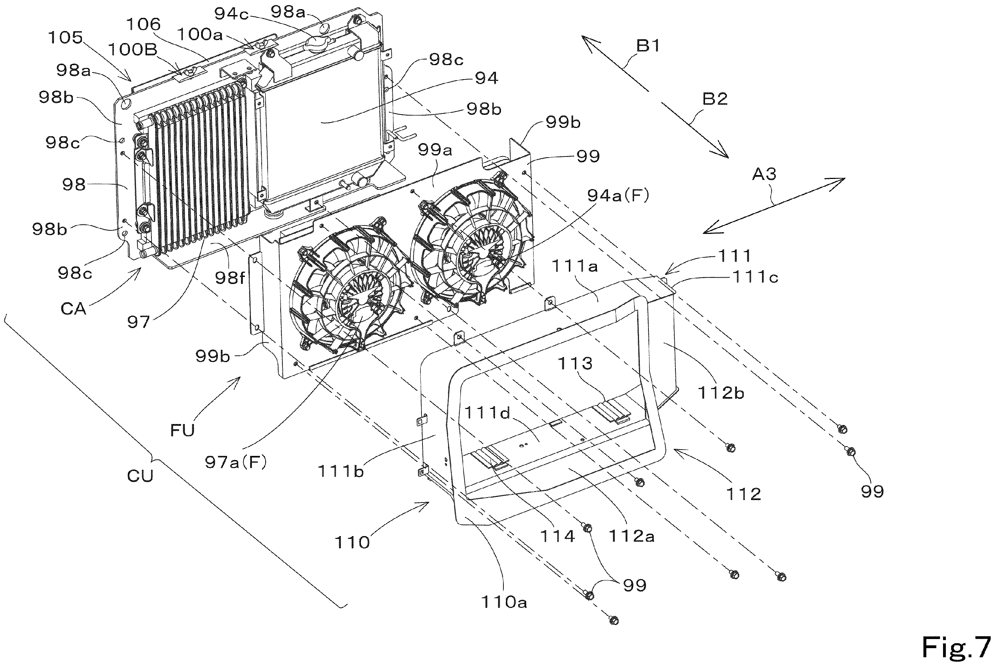

As illustrated in FIG. 2, the electric motor 91 and the hydraulic pump P are provided on the other side (right side) with respect to the central line Y of the swivel base 2 in the width direction B3 and are arranged side by side in the front-rear direction A3 beside the battery unit 90, as illustrated in FIGS. 6 and 7. Specifically, the electric motor 91 and the hydraulic pump P are provided beside (on the right of) the battery unit 90 so as to be located lower than the battery unit 90.

As illustrated in FIG. 5, the electric components 92 are arranged side by side in the width direction B3 above the battery unit 90. As illustrated in FIG. 4, the electric components 92 are devices and the like that are directly or indirectly connected to the battery unit 90 and transmit electric power supplied by the battery unit 90 or operates upon supply of the electric power. The electric components 92 are, for example, a junction box 92a, an inverter 92b, a DC/DC converter 92c. The junction box 92a is connected to the battery unit 90 and other devices including the inverter 92b and transmits electric power supplied from the battery unit 90 to the other devices.

The inverter 92b is provided on an electric power supply path 132 from the battery unit 90 to the electric motor 91 and adjusts electric power to be output to the electric motor 91. In the present embodiment, the inverter 92b is connected to the junction box 92a and the electric motor 91. The inverter 92b is a device that drives the electric motor 91, and converts DC electric power into three-phase AC electric power and supplies the three-phase AC electric power to the electric motor 91. The inverter 92b can freely change a current and a voltage of the electric power supplied to the electric motor 91.

The DC/DC converter 92c converts a voltage of an input DC current into a different voltage. In the present embodiment, the DC/DC converter 92c is a step-down converter that converts an input voltage into a lower voltage. The DC/DC converter 92c is, for example, provided on the swivel working machine 1 and supplies electric power to an in-vehicle battery 96 that supplies electric power to an electronic device.

FIG. 6 is a rear right perspective view illustrating the swivel base 2, the protection mechanism 80, and the exterior cover 70. As illustrated in FIG. 6, the exterior cover 70 includes an upper hood 71, a rear hood 72, a left hood 73, a right hood 74, and a front right hood 75. The upper hood 71 is a cover member that forms an upper side of the rear room R and is detachably attached to the support frame 35 so as to be cover the battery unit 90 and the electric components 92. The rear hood 72 is a cover member that forms a rear side of the rear room R and is attached to the support frame 35. The left hood 73 is a cover member that forms a left side of the rear room R and has an air intake port 73a illustrated in FIG. 1. The air intake port 73a is, for example, a plurality of horizontally-long openings that are arranged in the vertical direction, but is not limited to this configuration. The right hood 74 is a cover member that forms a rear right side of the rear room R. The right hood 74 is provided with an inspection door 76. The inspection door 76 is openable and closable with respect to the right hood 74 and includes an exhaust portion 77 for discharging air inside the exterior cover 70. The front right hood 75 is a cover member that is located forward of the right hood 74 and forms a front right side of the rear room R.

The charging port 93 is a socket to which a cable for accumulating electric power in the battery unit 90 is connected, and electric power is externally supplied thereto. As illustrated in FIGS. 3 and 6, the charging port 93 is exposed from the exterior cover 70 when a charging lid (lid member) 72a attached to the rear hood 72 is opened to connect a cable for externally supplying electric power to the charging port 93. The charging lid 72a is swingably coupled to the rear hood 72 with the use of a hinge or the like and is openable and closable about a swing shaft of the hinge.

FIG. 7 is an exploded perspective view of the cooling unit CU. The cooling unit CU is an assembly in which a frame body 98, a cooler CA, a fan unit FU, and a shroud 110 are combined. The cooler CA is a device that cools a device, and is attached to one surface (i.e., a surface facing the exterior cover 70) of the frame body 98. The fan unit FU is attached adjacent to the cooler CA to one surface of the frame body 98 so that an air intake side thereof faces the cooler CA. The fan unit FU includes fans F (the radiator fan 94a and the oil cooler fan 97a). The shroud 110 is attached to the fan unit FU.

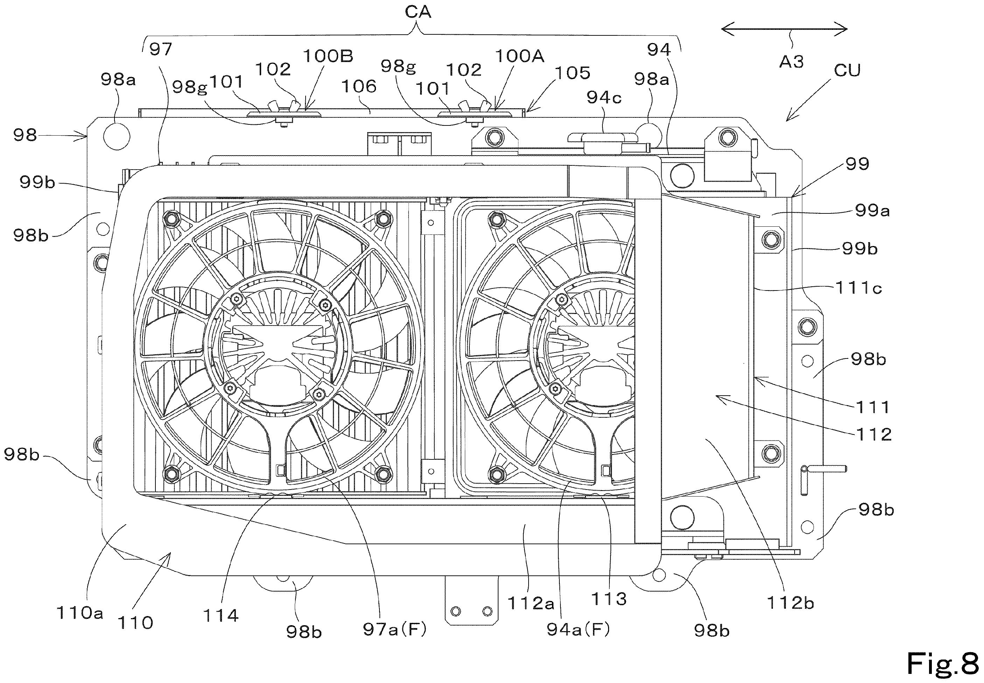

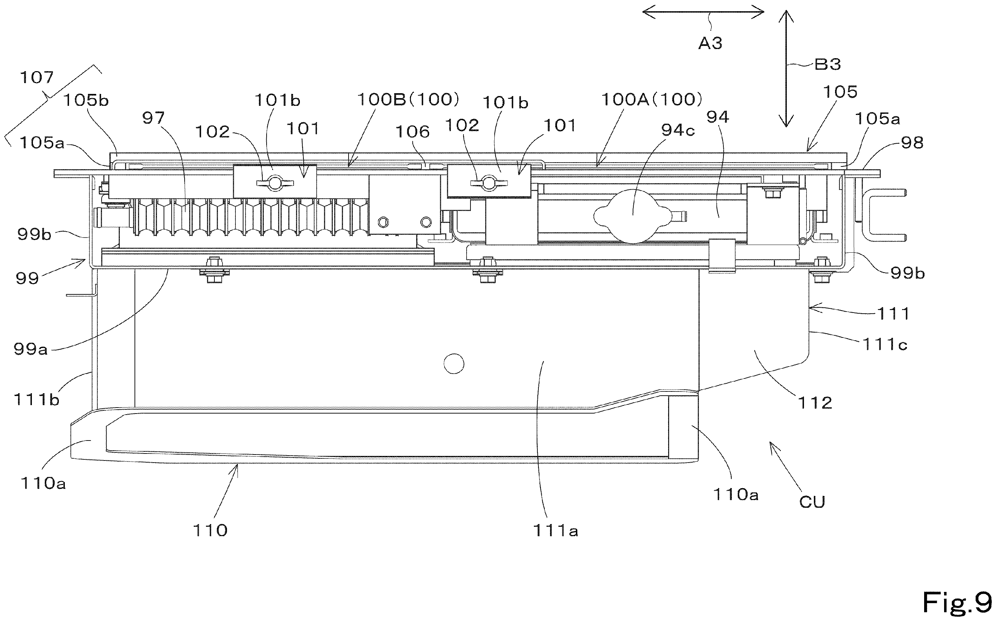

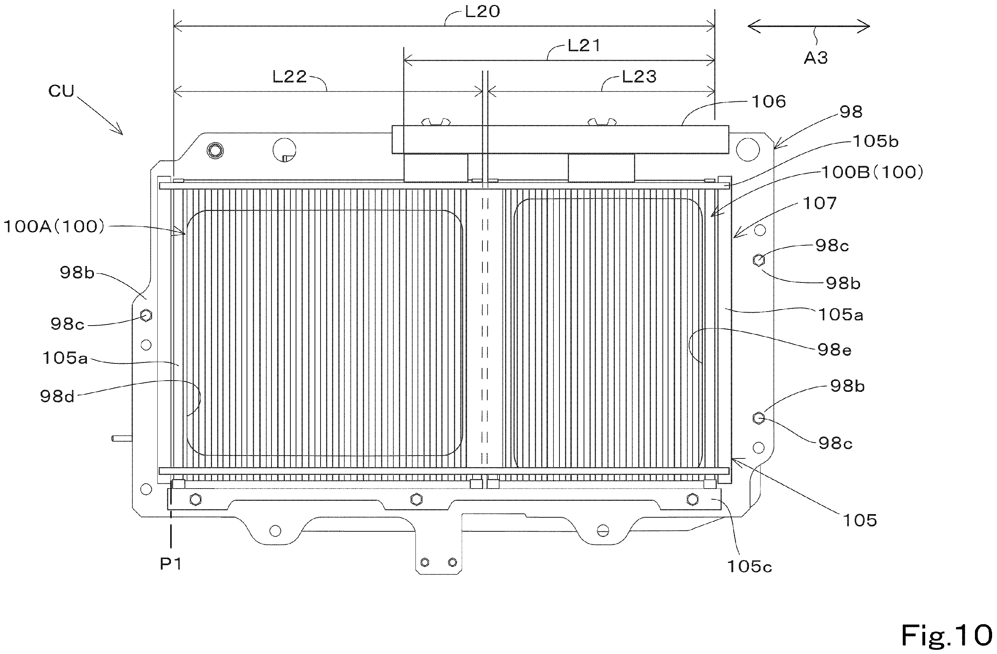

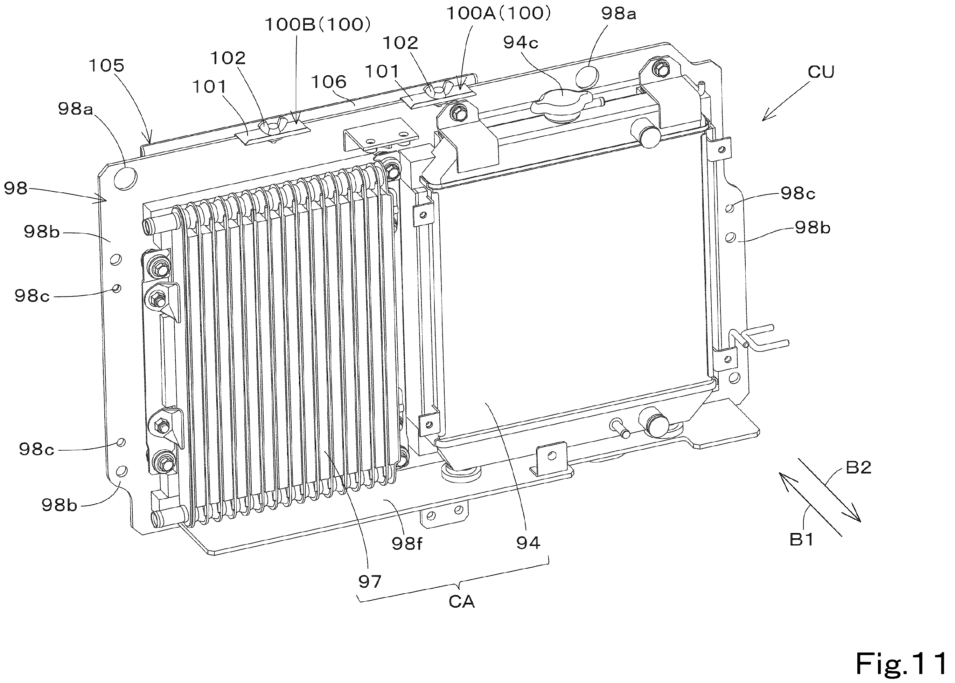

FIG. 8 illustrates the cooling unit CU viewed from an exhaust side. FIG. 9 is a plan view of the cooling unit CU. FIG. 10 illustrates the cooling unit CU viewed from an air intake side. FIG. 11 is a perspective view illustrating the oil cooler 97 and the radiator attached to the frame body of the cooling unit CU.

As illustrated in FIGS. 7 and 11, the cooler CA is attached to one surface of the frame body 98. Specifically, the radiator 94 (first to-be-cooled target) and the oil cooler 97 (second to-be-cooled target) are attached to one surface of the frame body 98 so as to be arranged side by side in a longitudinal direction of the frame body 98.

The cooler CA includes the radiator 94 that cools an electric device and the oil cooler 97 that cools a hydraulic fluid for driving the working device 20. The radiator 94 is a device that cools cooling water (refrigerant) for cooling units such as the electric motor 91 and the electric components 92. The radiator 94 includes, in an upper portion thereof, a water supply portion 94c to which the cooling water is supplied. The radiator 94 is cooled (heat is removed) by the radiator fan 94a, which will be described later. The radiator fan 94a generates cooling air by being driven to rotate and thus removes heat of the radiator 94. The radiator fan 94a sucks in air around the radiator 94 and discharges the air from an inside of the rear room R to an outside of the rear room R through an opening of the exterior cover 70. In this way, the cooling air whose temperature has risen through heat exchange with the radiator 94 is discharged to the outside. Note that although an outer surface of the radiator 94 is flat in FIGS. 7 and 11, this does not imply any limitation. The outer surface of the radiator 94 may have a shape such as an irregular shape, a wave shape, or a shape with a plurality of fins so that heat radiation performance is increased.

The oil cooler 97 is a device that cools a hydraulic fluid delivered from the hydraulic pump P. The oil cooler 97 is cooled by the oil cooler fan 97a, which will be described later. The oil cooler fan 97a generates cooling air by being driven to rotate, sucks in air around the oil cooler 97, and discharges the sucked air from an inside of the rear room R formed by the exterior cover 70 to the outside.

As illustrated in FIG. 3, the radiator 94 and the oil cooler 97 are provided above the hydraulic pump P and the electric motor 91. The radiator fan 94a and the oil cooler fan 97a thus suck in air around the battery unit 90 including air heated by heat radiated from the battery unit 90 and air that has been heated by heat radiated from the hydraulic pump P and the electric motor 91 and moved upward, and discharges the air to a machine body outside.

As illustrated in FIG. 10, the frame body 98 is a steel plate having a substantially rectangular shape when viewed in a direction indicated by arrow B1. As illustrated in FIG. 11, a lower end of the frame body 98 is bent and extends in a direction indicated by arrow B2 to form a bottom portion 98f. The frame body 98 has the openings 98d and 98e at portions facing the radiator 94 and the oil cooler 97 that constitute the cooling unit CU. That is, the openings 98d and 98e of the frame body 98 are arranged side by side (in the front-rear direction A3). One opening 98d has a size nearly equal to the radiator 94. The other opening 98e has a size nearly equal to the oil cooler 97.

As illustrated in FIG. 7, the fan unit FU is attached to one surface of the frame body 98. The fan unit FU includes the radiator fan 94a (first cooling fan) that cools the radiator 94, the oil cooler fan 97a (second cooling fan) that cools the oil cooler 97, and an attachment frame 99 to which the radiator fan 94a and the oil cooler fan 97a are attached side by side. The attachment frame 99 is a substantially gate-shaped frame body including an attachment plate portion 99a and a leg portion 99b that is bent and extends from both ends of the attachment plate portion 99a toward the frame body 98. To the attachment plate portion 99a, the oil cooler fan 97a and the radiator fan 94a are attached side by side in a longitudinal direction of the fan unit FU (the front-rear direction A3). The attachment plate portion 99a has, in a portion where the oil cooler fan 97a is located, a circular opening that faces the oil cooler 97. Furthermore, the attachment plate portion 99a has, in a portion where the radiator fan 94a is located, a circular opening that faces the radiator 94. As described above, the fan unit FU is attached to one surface of the frame body 98 so that the air intake side of the radiator fan 94a faces the radiator 94 and the air intake side of the oil cooler fan 97a faces the oil cooler 97.

As illustrated in FIGS. 7 to 9, the shroud 110 is attached to the attachment frame 99 of the fan unit FU so as to surround both of the radiator fan 94a and the oil cooler fan 97a. The shroud 110 guides cooling air generated by the radiator fan 94a and cooling air generated by the oil cooler fan 97a.

The shroud 110 includes a fixing portion 111 having a rectangular tube shape that surrounds both of the radiator fan 94a and the oil cooler fan 97a and a guide portion 112 that extends from the fixing portion 111 outward toward the exhaust side and guides cooling air generated by driving of the radiator fan 94a and cooling air generated by driving of the oil cooler fan 97a.

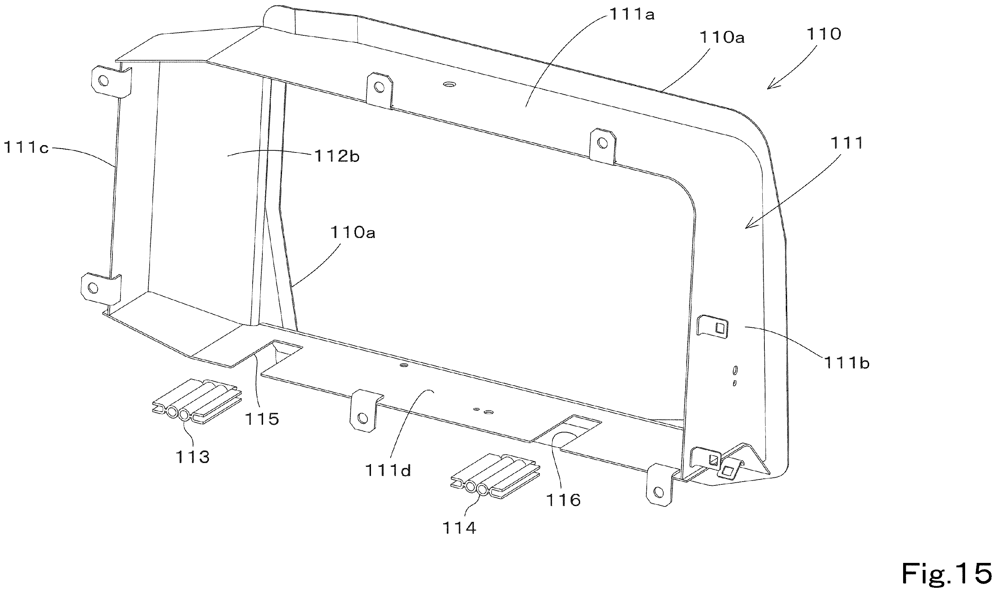

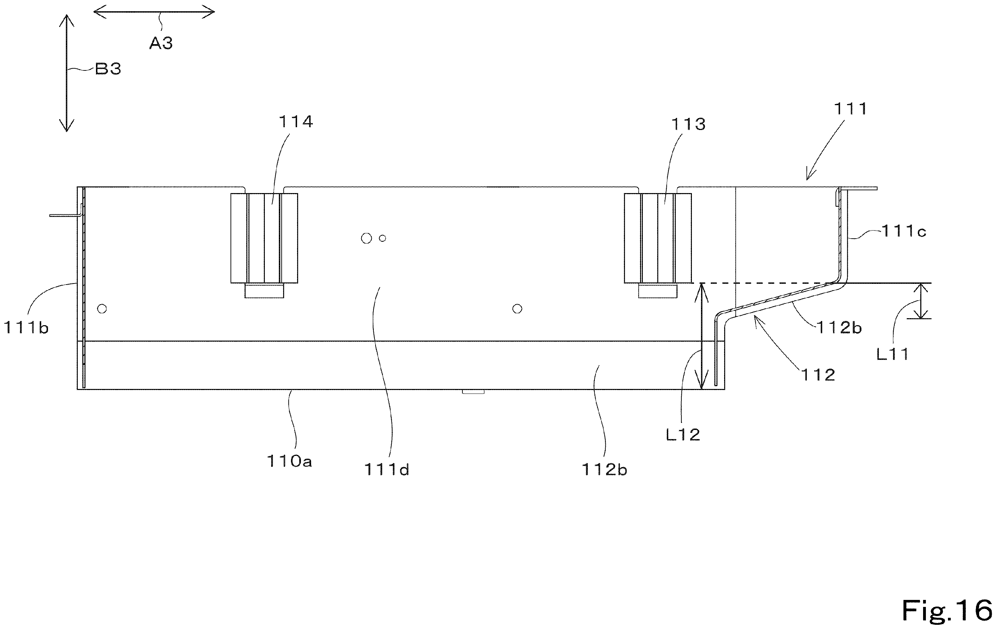

FIG. 15 is a perspective view illustrating the shroud. FIG. 16 is a horizontal cross-sectional view of the shroud. As illustrated in FIGS. 7 and 15 and other drawings, the fixing portion 111 is a rectangular-tube-shaped frame having an upper edge portion 111a, a left edge portion 111b, a lower edge portion 111d, and a right edge portion 111c. Both of the radiator fan 94a and the oil cooler fan 97a are surrounded by this rectangular-tube-shaped frame (the fixing portion 111).

As illustrated in FIGS. 7, 8, 16, and others, the lower edge portion 111d includes a first elastic support body 113 that supports a case lower portion of the radiator fan 94a and a second elastic support body 114 that supports a case lower portion of the oil cooler fan 97a. Specifically, as illustrated in FIG. 15, the lower edge portion 111d includes a first cutout portion 115 in a portion corresponding to the case lower portion of the radiator fan 94a and a second cutout portion 116 in a portion corresponding to the case lower portion of the oil cooler fan 97a. The first elastic support body 113 is provided in the first cutout portion 115, and the second elastic support body 114 is provided in the second cutout portion 116.

The guide portion 112 includes a downward inclined extension portion 112a that extends outward in an obliquely downward direction from an end portion of the lower edge portion 111d of the fixing portion 111 and a right-side bent extension portion 112b that is bent and extends from an end portion of the right edge portion 111c of the fixing portion 111 toward an opening of the fixing portion 111. As illustrated in FIG. 16, a protruding length L11 by which the right-side bent extension portion 112b protrudes from the fixing portion 111 is shorter than a protruding length L11 by which the downward inclined extension portion 112a protrudes from the fixing portion 111.

As illustrated in FIGS. 9 and 10, an air filter 100 and a mount portion 105 where the air filter 100 is mounted are provided on the other surface opposite to the one surface of the frame body 98 (i.e., on a surface opposite to a surface facing the exterior cover 70). The air filter 100 includes a first air filter 100A for the radiator 94 and a second air filter 100B for the oil cooler 97.

The first air filter 100A and the second air filter 100B are arranged side by side on the mount portion 105 in the longitudinal direction of the frame body 98 (the front-rear direction A3).

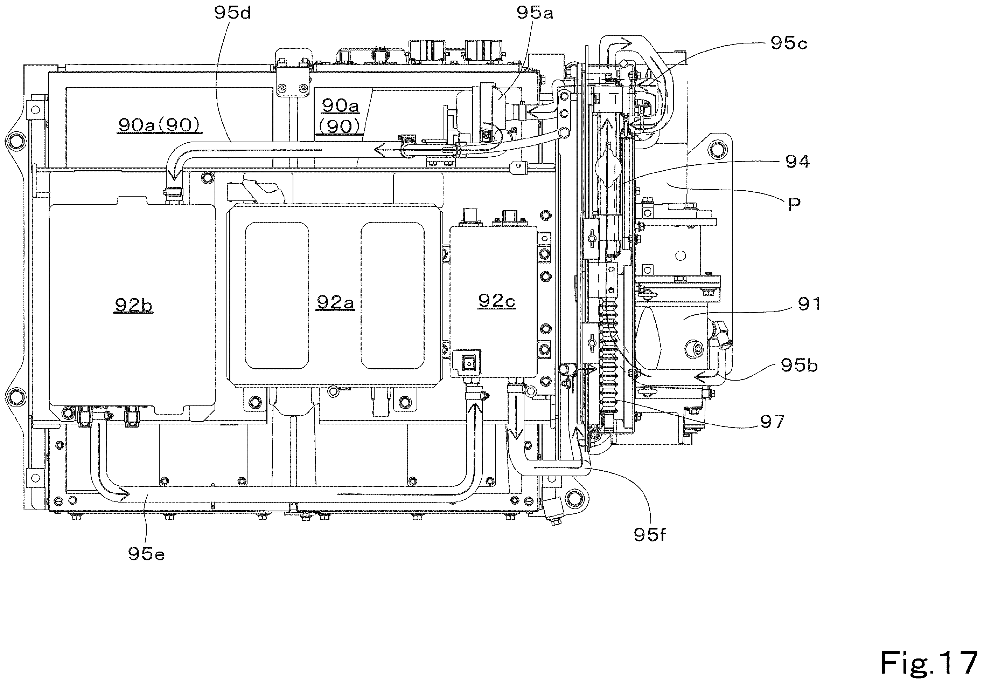

The water cooling path 95 for the radiator 94 is described below. FIG. 17 illustrates the water cooling path 95 for the radiator 94. As illustrated in FIG. 17, the swivel working machine 1 includes the water cooling path 95 that connects members such as the radiator 94, the electric motor 91, and the electric components 92 (e.g., the inverter 92b and the DC/DC converter 92c) and through which a refrigerant cooled by the radiator 94 and a refrigerant that has exchanged heat with the electric motor 91 and the electric components 92 flow. On the water cooling path 95, a cooling pump 95a that delivers cooling water and circulates the cooling water as a refrigerant is provided. In the present embodiment, the water cooling path 95 causes the cooling water to circulate from the radiator 94 back to the radiator 94 by passing the cooling pump 95a, the inverter 92b, the DC/DC converter 92c, and the electric motor 91. Specifically, the water cooling path 95 includes a feeding water path 95b, a return water path 95c, a first water path 95d, a second water path 95e, and a third water path 95f.

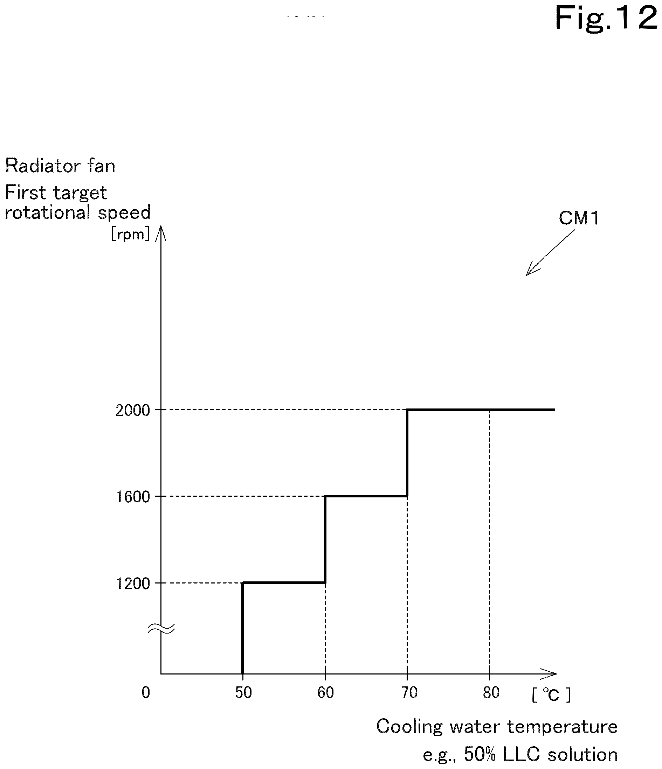

As illustrated in FIG. 12, the feeding water path 95b is a water path for feeding a refrigerant from members such as the electric motor 91 to the radiator 94. Specifically, the feeding water path 95b connects the electric motor 91 and the radiator 94 and causes a refrigerant to flow from the electric motor 91 to the radiator 94. The return water path 95c is a water path that returns a refrigerant from the radiator 94 to the cooling pump 95a. Specifically, the return water path 95c connects the radiator 94 and the cooling pump 95a and causes a refrigerant to flow from the radiator 94 to the cooling pump 95a.

The first water path 95d connects the cooling pump 95a and the inverter 92b and causes a refrigerant to flow from the cooling pump 95a to the inverter 92b. The second water path 95e connects the inverter 92b and the DC/DC converter 92c and causes a refrigerant to flow from the inverter 92b to the DC/DC converter 92c. The third water path 95f connects the DC/DC converter 92c and the electric motor 91 and causes a refrigerant to flow from the DC/DC converter 92c to the electric motor 91. That is, cooling water cooled by the radiator 94 flows from the radiator 94 and returns to the radiator 94 after passing the return water path 95c, the cooling pump 95a, the first water path 95d, the inverter 92b, the second water path 95e, the DC/DC converter 92c, the third water path 95f, the electric motor 91, and the feeding water path 95b.

As illustrated in FIG. 4, the swivel working machine 1 includes a controller 120 and a storing unit (storage and/or memory) 121. The controller 120 is a device including an electric/electronic circuit, a program stored in a CPU or the like, and the like. The controller 120 controls various devices of the swivel working machine 1. For example, the controller 120 is provided around the operator's seat 8 and controls a rotational speed of the electric motor 91 based on operation of the rotational speed operator 5c, which is operable. Furthermore, the controller 120 is provided around the operator's seat 8 and controls start-up of the swivel working machine 1 based on operation of a starter switch 7 that can be operated to start the swivel working machine 1.

The storing unit 121 is a nonvolatile memory or the like and stores therein various kinds of information concerning control of the controller 120, and the like. For example, the storing unit 121 stores therein information such as a table concerning the rotational speed of the electric motor 91 with respect to an operation amount of the rotational speed operator 5c.

As illustrated in FIG. 4, the battery unit 90 includes a plurality of batteries 90a. The plurality of batteries 90a are connected in parallel. The batteries 90a can accumulate electric power therein, and are, for example, secondary batteries such as lithium-ion batteries or lead batteries. Each of the batteries 90a includes a plurality of cells, and the plurality of cells are electrically connected in series and/or in parallel. In the present embodiment, the battery unit 90 includes two batteries 90a. Note that the number of batteries 90a included in the battery unit 90 need not be plural and is not limited to two.

As illustrated in FIG. 4, the swivel working machine 1 includes a connection switcher 131. The connection switcher 131 switches, for each battery 90a, the electric power supply path 132 from the battery 90a to the electric motor 91 between a connected state and a shut-off state. The connection switcher 131 switches the electric power supply path 132 between the connected state and the shut-off state, for example, by performing relay opening/closing operation of at least a portion of the electric power supply path 132. In this way, the battery unit 90 causes the battery 90a in the connected state among the plurality of batteries 90a to output electric power and stops output of electric power from the other battery 90a in the shut-off state. Control of the connection switcher 131, that is, setting of the battery 90a that outputs electric power from the battery unit 90 is performed by the controller 120.

Each battery 90a includes a battery management unit (BMU) 123 that monitors and controls the battery 90a. The BMU 123 acquires a voltage, a temperature, a current, a terminal voltage of an internal cell, and the like of the battery 90a and calculates a remaining battery level of the battery 90a. Furthermore, the BMU 123 can perform relay opening/closing control inside the battery 90a and can control start and stoppage of electric power supply of the battery 90a. Furthermore, the BMU 123 (detector) can determine whether the battery unit 90 is in a charged state (i.e., being charged) or in a discharged state (i.e., being used) by acquiring a voltage, a current, and the like of the battery 90a. Note that the BMU 123 may be included in each battery 90a or may be installed outside each battery 90a.

The controller 120 sets one of the plurality of batteries 90a as an output battery that outputs electric power from the battery unit 90 by bringing the one battery 90a into the connected state and sets the other battery 90a as a stopped battery that does not output electric power by bringing the other battery 90a into the shut-off state. The controller 120 includes a battery controller 120a that performs control of switching the output battery.

The battery controller 120a is communicably connected to the connection switcher 131 by a wire or wirelessly and controls the connection switcher 131 by transmitting a signal. In this way, the battery controller 120a performs control of switching (processing of switching) the output battery and the stopped battery by switching the connected state and the shut-off state of the plurality of batteries 90a.

The battery controller 120a performs control of switching the output battery and the stopped battery based on a predetermined condition. Specifically, in a case where driving of the working device 20 is prohibited or restricted, the battery controller 120a sets the output battery and the stopped battery based on a selector 122 communicably connected to the controller 120 and a remaining battery level of each of the plurality of batteries 90a.

The battery controller 120a sets, as the output battery, the battery 90a selected by using the selector 122. On the other hand, the battery controller 120a sets, as the stopped battery, the battery 90a that is not selected by using the selector 122. The selector 122 selects one of the plurality of batteries 90a based on worker's operation. That is, the selector 122 receives a worker's instruction to select the battery 90a to be set as the output battery. For example, the selector 122 is a plurality of operation switches that are provided around the operator's seat 8 and can be pressed. The plurality of operation switches are associated with the respective batteries 90a, and when one operation switch is operated, one battery 90a associated with the one operation switch is selected.

As illustrated in FIG. 4, the swivel working machine 1 includes a first drive motor 30b that drives the oil cooler fan 97a and a second drive motor 94b that drives the radiator fan 94a. The oil cooler fan 97a and the radiator fan 94a can be independently driven separately from the electric motor 91. The following describes control of the oil cooler fan 97a and the radiator fan 94a.

The first drive motor 30b and the second drive motor 94b are connected to the controller 120. The controller 120 includes the fan controller 120b that controls driving of the first drive motor 30b and the second drive motor 94b. The fan controller 120b controls the first drive motor 30b (the radiator fan 94a) and the second drive motor 94b (the oil cooler fan 97a) independently of each other.

As illustrated in FIG. 4, the swivel working machine 1 includes, as a temperature detector TD that detects a temperature of a to-be-cooled target, a water temperature detector 126 (first temperature detector) and a fluid temperature detector 127 (second temperature detector). The water temperature detector 126 is a sensor that detects a temperature of cooling water (refrigerant) as a voltage value. The water temperature detector 126 is, for example, provided on the feeding water path 95b and detects a temperature RT of cooling water flowing toward the radiator 94. The water temperature detector 126 is connected to the controller 120 by a wire or wirelessly and outputs, as a signal, detected temperature information of the cooling water to the controller 120.

The fluid temperature detector 127 is a sensor that detects a temperature OT of a hydraulic fluid as a voltage value. The fluid temperature detector 127 is, for example, provided on a pipe path connected to the oil cooler 97 and detects a temperature OT of a hydraulic fluid flowing toward the oil cooler 97. The fluid temperature detector 127 is connected to the controller 120 by a wire or wirelessly and outputs, as a signal, detected temperature information of the hydraulic fluid to the controller 120.

In a case where the BMU 123 is detecting the discharged state (battery output, use) of the battery unit 90, the fan controller 120b (the controller 120) rotates the radiator fan 94a at a predetermined first target rotational speed in accordance with the temperature RT of the cooling water detected by the water temperature detector 126. FIG. 12 illustrates a control map CM1 that defines a relationship between the temperature RT of the cooling water and the first target rotational speed. The control map CM1 illustrated in FIG. 12 has such a characteristic that the first target rotational speed of the radiator fan 94a changes in a stepwise manner as the temperature RT of the cooling water rises.

As illustrated in FIG. 12, the fan controller 120b does not drive the radiator fan 94a in a case where the temperature RT of the cooling water satisfies 0°C ≤ RT < 50°C. The fan controller 120b rotates the radiator fan 94a at the predetermined first target rotational speed (1200 rpm) in a case where the temperature RT of the cooling water satisfies 50°C ≤ RT < 60°C, rotates the radiator fan 94a at the predetermined first target rotational speed (1600 rpm) in a case where the temperature RT of the cooling water satisfies 60°C ≤ RT < 70°C, and rotates the radiator fan 94a at the predetermined first target rotational speed (2000 rpm) in a case where the temperature RT of the cooling water satisfies 70°C ≤ RT.

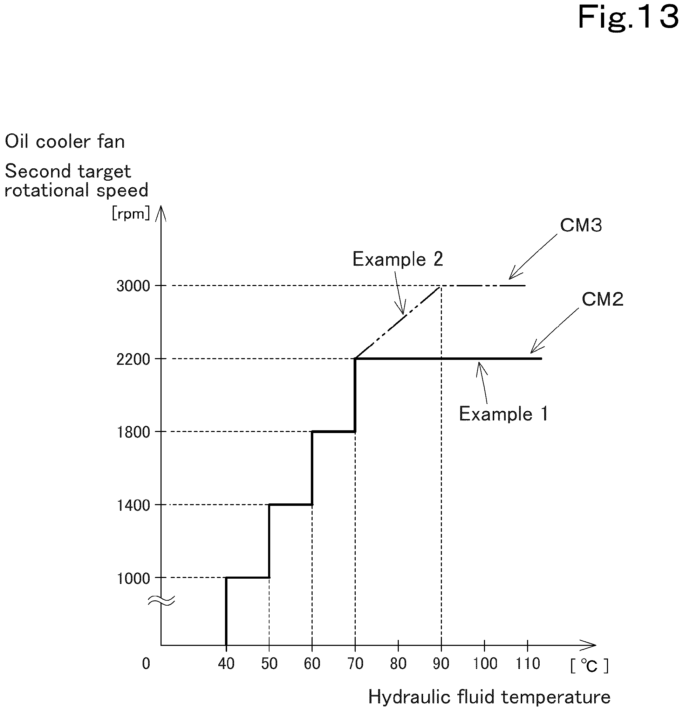

In a case where the BMU 123 is detecting the discharged state (battery output, use) of the battery unit 90, the fan controller 120b (the controller 120) rotates the oil cooler fan 97a at a predetermined second target rotational speed in accordance with the temperature OT of the hydraulic fluid detected by the fluid temperature detector 127. The second target rotational speed is set to a rotational speed different from the first target rotational speed by a predetermined difference (e.g., 200 rpm) or more irrespective of the temperature of the cooling water and the temperature of the hydraulic fluid. FIG. 13 illustrates a control map CM2 that defines a relationship between the temperature OT of the hydraulic fluid and the second target rotational speed. The control map CM2 illustrated in FIG. 13 has such a characteristic that the second target rotational speed of the oil cooler fan 97a changes in a stepwise manner as the temperature OT of the hydraulic fluid rises.

As illustrated in FIG. 13, the fan controller 120b does not drive the oil cooler fan 97a in a case where the temperature OT of the hydraulic fluid detected by the fluid temperature detector 127 satisfies 0°C ≤ OT < 40°C. The fan controller 120b rotates the oil cooler fan 97a at the predetermined second target rotational speed (1000 rpm) in a case where the temperature OT of the hydraulic fluid satisfies 40°C ≤ OT < 50°C, rotates the oil cooler fan 97a at the predetermined second target rotational speed (1400 rpm) in a case where the temperature OT of the hydraulic fluid satisfies 50°C ≤ OT < 60°C, rotates the oil cooler fan 97a at the predetermined second target rotational speed (1800 rpm) in a case where the temperature OT of the hydraulic fluid satisfies 60°C ≤ OT < 70°C, and rotates the oil cooler fan 97a at the predetermined second target rotational speed (2200 rpm) in a case where the temperature OT of the hydraulic fluid satisfies 70°C ≤ OT.

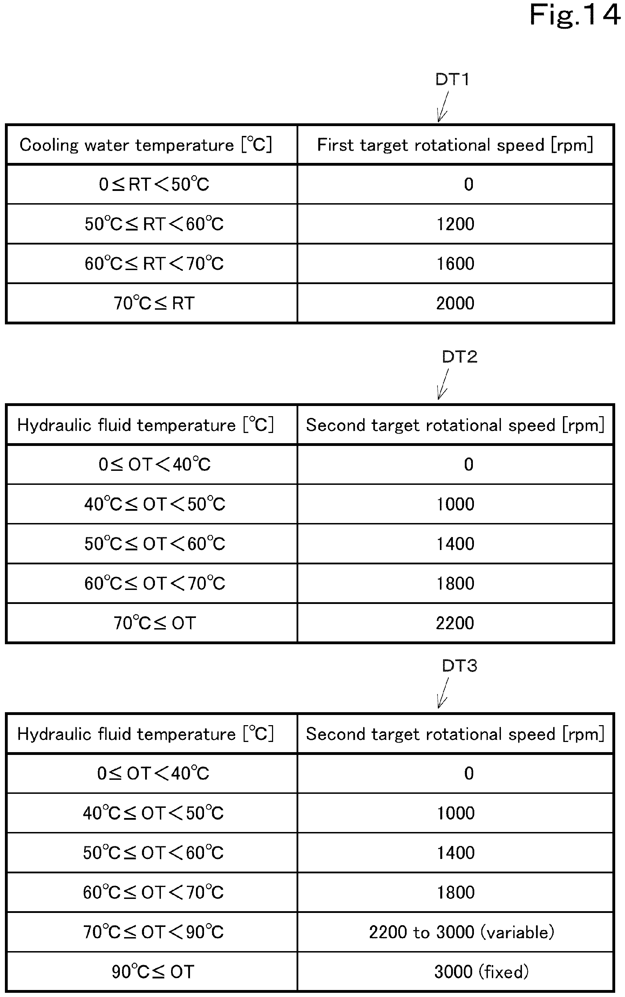

FIG. 14 illustrates storage tables DT1, DT2, and DT3 stored in the storing unit 121. The storing unit 121 (storing device) stores therein a storage table DT1 (first data) in which the first target rotational speed is defined in advance for each of a plurality of temperature ranges of the radiator 94 (first to-be-cooled target) and a storage table DT2 (second data) in which the second target rotational speed always differing by a predetermined difference (e.g., 200 rpm) or more from the first target rotational speed is defined in advance for each of a plurality of temperature ranges of the oil cooler 97 (second to-be-cooled target).

As described above, the fan controller 120b changes the first target rotational speed of the radiator fan 94a and the second target rotational speed of the oil cooler fan 97a in a stepwise manner so that the first target rotational speed and the second target rotational speed have a predetermined difference (e.g., 200 rpm) or more. By thus setting the target rotational speeds by using the storage tables DT1 and DT2, the fan controller 120b can set the rotational speed of the radiator fan 94a and the rotational speed of the oil cooler fan 97a to rotational speeds having the predetermined difference or more. It is therefore possible to easily prevent whine noise without performing determination control concerning a difference in rotational speed between the fans.

The fan controller 120b may use a control map CM3 instead of the control map CM2 illustrated in FIG. 13. For example, the control map CM3 is identical to the control map CM2 in characteristic in a range of the temperature OT of the hydraulic fluid of less than 70°C but is different from the control map CM2 in characteristic in a range equal to or higher than 70°C. Specifically, in a case where the temperature OT of the hydraulic fluid detected by the fluid temperature detector 127 is 70°C ≤ OT < 90°C, the fan controller 120b rotates the oil cooler fan 97a so that the second target rotational speed continuously increases as the temperature OT of the hydraulic fluid increases. The fan controller 120b continuously increases the second target rotational speed as the temperature detected by the fluid temperature detector 127 increases based on the storage table DT3 (see FIG. 14) stored in advance in the storing unit 121 as for the temperature range "70°C ≤ OT < 90°C" of the oil cooler 97 to which the second target rotational speed (2200 rpm) higher than the first target rotational speed (2000 rpm) indicated by the highest temperature range "70°C ≤ RT" among the plurality of temperature ranges of the radiator 94 belongs.

Instead of the storage table DT1 and the storage table DT2 (or the storage table DT3), the storing unit 121 may store therein in advance a first arithmetic expression (arithmetic expression) in which the first target rotational speed is defined in advance for each of the plurality of temperature ranges of the radiator 94 (first to-be-cooled target) and a second arithmetic expression (arithmetic expression) in which the second target rotational speed having a predetermined difference or more from the first target rotational speed is defined in advance for each of the plurality of temperature ranges of the oil cooler 97 (second to-be-cooled target).

The swivel working machine 1 includes a notifier 124 that is provided around the operator's seat 8 and provides a notification to a worker or an administrator. The notifier 124 includes a display 124a such as a monitor that displays an image and an audio output device 124b (speaker) that provides an audio notification. The notifier 124 provides a notification concerning remaining battery levels of the plurality of batteries 90a calculated by the BMU 123. Furthermore, in the charged state of the battery unit 90, the notifier 124 provides, for example, a notification that the battery unit 90 is being charged and that the radiator fan 94a and the oil cooler fan 97a are being driven.

In a case where driving of the working device 20 is prohibited or restricted, the battery controller 120a charges the battery unit upon receipt of an instruction to start charging given to the selector 122 by the worker.

In a case where the BMU 123 is detecting a charged state (charging) of the battery unit 90, the fan controller 120b rotates the radiator fan 94a at a predetermined first specified rotational speed (e.g., 800 rpm) and rotates the oil cooler fan 97a at a predetermined second specified rotational speed (e.g., 600 rpm) differing by a predetermined difference (e.g., 200 rpm) or more from the first specified rotational speed. Specifically, while the BMU 123 is detecting the charged state of the battery unit 90, the controller 120 rotates the radiator fan 94a at the first specified rotational speed (e.g., 800 rpm) and rotates the oil cooler fan 97a at the second specified rotational speed (e.g., 600 rpm) in a case where the temperature of the battery unit 90 detected by the BMU 123 is equal to or higher than a set temperature, and does not drive the radiator fan 94a or the oil cooler fan 97a in a case where the temperature of the battery unit 90 is less than the set temperature. Note that the first specified rotational speed and the second specified rotational speed are lower than the first target rotational speed of the radiator fan 94a and the second target rotational speed of the oil cooler fan 97a in the discharged state (during battery output) of the battery unit 90.

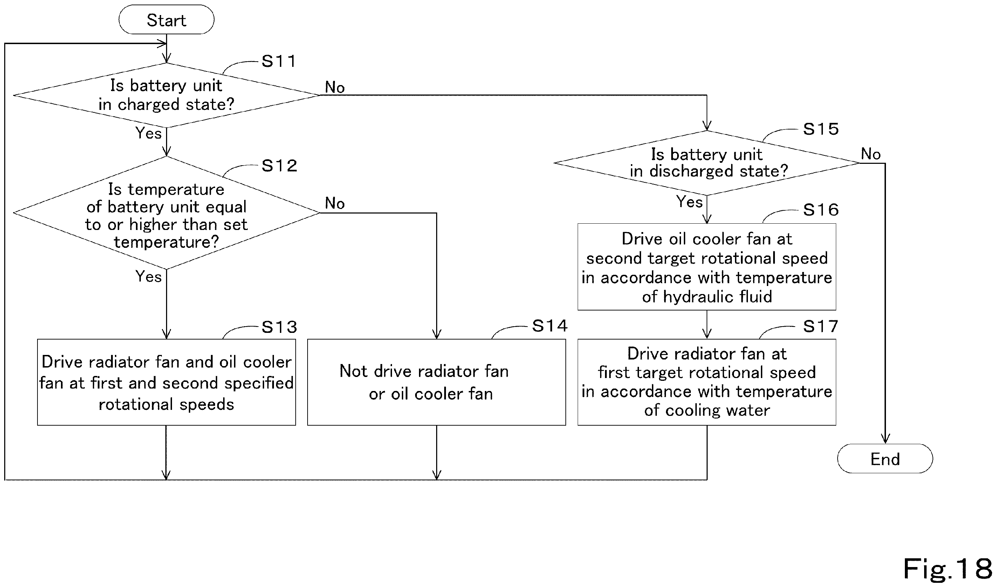

Control processing performed by the fan controller 120b is described below with reference to FIG. 18. FIG. 18 is a flowchart illustrating processing for controlling the radiator fan and the oil cooler fan. First, the fan controller 120b determines whether or not the BMU 123 is detecting the charged state (charging) of the battery unit 90 (S11). In a case where the battery unit 90 is in the charged state (being charged) (S11, Yes), the fan controller 120b determines whether or not the temperature of the battery unit 90 detected by the BMU 123 is equal to or higher than a set temperature (S 12). In a case where the temperature of the battery unit 90 is equal to or higher than the set temperature (S12, Yes), the fan controller 120b drives the radiator fan 94a at the first specified rotational speed (e.g., 800 rpm) and drives the oil cooler fan 97a at the second specified rotational speed (e.g., 600 rpm) (S13). In S13, only the radiator fan 94a or only the oil cooler fan 97a may be driven.

In a case where it is determined in S 12 that the temperature of the battery unit 90 is not equal to or higher than the set temperature (S12, No), that is, in a case where the temperature of the battery unit 90 is less than the set temperature, the fan controller 120b does not drive the radiator fan 94a or the oil cooler fan 97a (S14).

In a case where it is determined in S11 that the battery unit 90 is not in the charged state (being charged) (S11, No), the fan controller 120b determines whether or not the battery unit 90 is in a discharged state (being used) (S15). In a case where the battery unit 90 is in the discharged state (being used) (S15, Yes), the fan controller 120b drives the oil cooler fan 97a at the second target rotational speed based on the temperature OT of the hydraulic fluid detected by the fluid temperature detector 127 and the storage table DT2 (or the storage table DT3) stored in the storing unit 121 (S16). The fan controller 120b drives the radiator fan 94a at the first target rotational speed based on the temperature RT of the cooling water detected by the water temperature detector 126 and the storage table DT1 stored in the storing unit 121 (S17).

The fan controller 120b returns to the process in S11 after S13, S14, or S17.

In a case where it is determined in S15 that the battery unit 90 is not in the discharged state (being used) (S15, No), the fan controller 120b ends this processing.

A swivel working machine 1 as has been described includes a radiator fan 94a, a oil cooler fan 97a, a temperature detector TD to detect a temperature of a to-be-cooled target, a storage and/or memory 121 to store first data defining a correspondence relationship between the temperature detected by the temperature detector TD and the first target rotational speed which is a target rotational speed of the radiator fan 94a, and second data defining a correspondence relationship between the temperature detected by the temperature detector TD and the second target rotational speed which is a target rotational speed of the oil cooler fan 97a, and a controller 120 to control the rotational speed of the radiator fan 94a to the first target rotational speed corresponding to the temperature detected by the temperature detector TD and control the rotational speed of the oil cooler fan 97a to the second target rotational speed corresponding to the temperature detected by the temperature detector TD, and the second target rotational speed is set such that a difference between the second target rotational speed and the first target rotational speed is equal to or larger than a predetermined difference irrespective of the temperature detected by the temperature detector TD.

With this configuration, the controller 120 rotates the radiator fan 94a at the first target rotational speed and rotates the oil cooler fan 97a at the second target rotational speed differing by a predetermined difference or more from the first target rotational speed without the need to determine the difference between target rotational speeds. It is therefore possible to prevent whine noise via simple fan control.

The radiator fan 94a (first cooling fan) is provided to cool a radiator 94 (first to-be-cooled target) and the oil cooler fan 97a (second cooling fan) is provided to cool an oil cooler 97 (second to-be-cooled target) different from the radiator 94, the temperature detector TD includes a water temperature detector 126 to detect a temperature RT of cooling water of the radiator 94 and an fluid temperature detector 127 to detect a temperature OT of hydraulic fluid of the oil cooler fan 97a , the first data defines a correspondence relationship between the temperature detected by the water temperature detector 126 and the first target rotational speed, and the second data defines a correspondence relationship between the temperature detected by the fluid temperature detector 127 and the second target rotational speed.

With this configuration, the controller 120 does not need to perform control to determine whether or not the difference between the target rotational speed of the radiator fan 94a and the target rotational speed of the oil cooler fan 97a is less than a predetermined difference. Furthermore, the controller 120 does not need to perform control to change the target rotational speed of the radiator fan 94a and the target rotational speed of the oil cooler fan 97a such that the target rotational speed of the radiator fan 94a and the target rotational speed of the oil cooler fan 97a are equal to or higher than the target rotational speeds and that the difference between the target rotational speed of the radiator fan 94a and the target rotational speed of the oil cooler fan 97a is equal to or larger than the predetermined difference if it is determined that the difference is less than the predetermined difference. It is therefore possible to achieve simple fan control. Furthermore, since the same fans can be used as the radiator fan 94a and the oil cooler fan 97a, i.e., the same component can be used for both fans, it is possible to reduce cost. Furthermore, since fan rotating control is performed independently and not influenced by the operation of the other fan, stable control can be achieved.

The first data is a storage table DT1 or an arithmetic expression in which the first target rotational speed is defined in advance for each of the plurality of temperature ranges of the radiator 94, the second data is a storage table DT2 (or DT3) or an arithmetic expression in which the second target rotational speed is defined in advance for each of the plurality of temperature ranges of the oil cooler 97, and the controller 120 determines one of the temperature ranges of the radiator 94 to which the temperature detected by the water temperature detector 126 belongs and rotates the radiator fan 94a at the first target rotational speed corresponding to the determined temperature range, and determines one of the temperature ranges of the oil cooler 97 to which the temperature detected by the fluid temperature detector 127 belongs and rotates the oil cooler fan 97a at the second target rotational speed corresponding to the determined temperature range.

With this configuration, it is only necessary that the controller 120 determine the first target rotational speed indicated by the temperature range to which the temperature detected by the water temperature detector 126 belongs and determine the second target rotational speed indicated by the temperature range to which the temperature detected by the fluid temperature detector 127 belongs based on the storage tables DT1 and DT2 (or DT3) or the arithmetic expressions. Since the first target rotational speed and the second target rotational speed are related such that the difference therebetween is equal to or larger than a predetermined difference, the controller 120 need only rotate the radiator fan 94a at the determined first target rotational speed and rotate the oil cooler fan 97a at the determined second target rotational speed. It is therefore possible to achieve simple fan control.

The second data is defined such that the second target rotational speed continuously increases as the temperature detected by the fluid temperature detector 127 increases with regard to one of the temperature ranges of the oil cooler 97 to which the second target rotational speed higher than a maximum value of the first target rotational speed belongs.

With this configuration, the second target rotational speed continuously increases as the temperature detected by the fluid temperature detector 127 increases with regard to one of the temperature ranges of the oil cooler 97 to which the second target rotational speed higher than the first target rotational speed indicated by the highest one of the plurality of temperature ranges of the radiator 94 belongs. This makes it possible to effectively cool the oil cooler 97 while preventing or reducing the likelihood that electric power consumption and noise will suddenly increase and prevent the occurrence of whine noise.

The swivel working machine 1 includes a battery unit 90 and a BMU 123 to detect whether the battery unit 90 is in a charged state or in a discharged state, and the controller 120, in a case where the BMU 123 is detecting the charged state of the battery unit 90, rotates the radiator fan 94a at a predetermined first specified rotational speed and rotates the oil cooler fan 97a at a predetermined second specified rotational speed differing by a predetermined difference or more from the first specified rotational speed.

With this configuration, when the battery unit 90 is in the charged state, the radiator fan 94a is rotated at the first specified rotational speed, and the oil cooler fan 97a is rotated at the second specified rotational speed differing by a predetermined difference or more from the first specified rotational speed. Since it is unnecessary to determine the difference between the target rotational speeds, whine noise can be prevented using simple fan control when the battery unit 90 is in the charged state. Furthermore, when the battery unit 90 is in the charged state, the radiator 94 and the oil cooler 97 can be cooled, the radiator fan 94a and the oil cooler fan 97a can be used as battery fans, air around the battery unit 90 can be discharged to the outside, and the battery unit 90 can be cooled. That is, when the battery unit 90 is in the charged state, the battery unit 90, the radiator 94, and the oil cooler 97 can be cooled.

The swivel working machine 1 includes a BMU 123 to detect the temperature of the battery unit 90, and the controller 120, while the BMU 123 is detecting the charged state of the battery unit 90, rotates the radiator fan 94a at the predetermined first specified rotational speed and rotates the oil cooler fan 97a at the predetermined second specified rotational speed differing by a predetermined difference or more from the first specified rotational speed if the temperature of the battery unit 90 detected by the BMU 123 is equal to or higher than a set temperature and does not drive the radiator fan 94a or the oil cooler fan 97a if the temperature of the battery unit 90 is less than the set temperature.

With this configuration, the battery unit 90, the radiator 94, and the oil cooler 97 can be properly cooled in accordance with the temperature of the battery unit 90 in the charged state.

The swivel working machine 1 includes a cooling unit CU including a frame body 98, the radiator fan 94a and the oil cooler fan 97a attached side by side to one surface of the frame body 98, and a shroud 110 surrounding the radiator fan 94a and the oil cooler fan 97a which are combined.

With this configuration, it is possible to prevent the radiator fan 94a and the oil cooler fan 97a of the cooling unit CU from generating whine noise.

The shroud 110 includes a first elastic support body 113 to support the radiator fan 94a and a second elastic support body 114 to support the oil cooler fan 97a. With this configuration, vibration of the radiator fan 94a is reduced by the first elastic support body 113, and vibration sound of the radiator fan 94a can be reduced. Furthermore, vibration of the oil cooler fan 97a is reduced by the second elastic support body 114, and vibration sound of the oil cooler fan 97a can be reduced. It is therefore possible to further prevent the radiator fan 94a and the oil cooler fan 97a from generating whine noise.

The shroud 110 is in a rectangular tube shape to surround both the radiator fan 94a and the oil cooler fan 97a, and includes a fixing portion 111 including an upper edge portion 111a, a left edge portion 111b, a lower edge portion llld, and a right edge portion 111c and a guide portion 112 extending from the fixing portion 111 outward toward the exhaust side and guides cooling air generated by driving of the radiator fan 94a and cooling air generated by driving of the oil cooler fan 97a, the lower edge portion 111d includes a first cutout portion 115 in a portion to support the radiator fan 94a and a second cutout portion 116 in a portion to support the oil cooler fan 97a, the first elastic support body 113 is provided in the first cutout portion 115, and the second elastic support body 114 is provided in the second cutout portion 116. With this configuration, an increase in dimension of the fixing portion 111 in the up-down direction can be reduced as compared with the case where the first elastic support body 113 and the second elastic support body 114 are provided on the lower edge portion 111d, and the shape of the fixing portion 111 can be made minimum such that the lower edge portion 111d makes contact with the case lower portion corresponding to the radiator fan 94a and the case lower portion corresponding to the oil cooler fan 97a. Furthermore, vibration sound of the radiator fan 94a and the oil cooler fan 97a can be reduced. It is therefore possible to further prevent the radiator fan 94a and the oil cooler fan 97a from generating whine noise.

The swivel working machine 1 includes a working device 20 to be driven by hydraulic pressure and a water cooling path 95 to cool a to-be-cooled device by circulating cooling water, the first cooling fan is a radiator fan 94a, and the second cooling fan is an oil cooler fan 97a to cool the hydraulic fluid to drive the working device 20. With this configuration, it is possible to prevent the radiator fan 94a and the oil cooler fan 97a from generating whine noise.

### <First Variation>

A first variation is described. As illustrated in FIG. 4, the swivel working machine 1 may include a detector 128 such as a detection switch that detects opening and closing of the inspection door 76. The detector 128 outputs a detection signal indicating an open state to the controller 120 in a case where the inspection door 76 is in an open state, and outputs a detection signal indicating a closed state in a case where the inspection door 76 is in a closed state. The controller 120 may control at least one of the electric motor 91, the radiator fan 94a, and the oil cooler fan 97a based on a detection signal from the detector 128. In the first variation, in a case where the open state of the inspection door 76 is detected by the detector 128, the controller 120 drives the electric motor 91 at a rotational speed lower than that in a case where the inspection door 76 is in the closed state. The controller 120 stops rotation of the radiator fan 94a and the oil cooler fan 97a in a case where the open state of the inspection door 76 is detected by the detector 128.

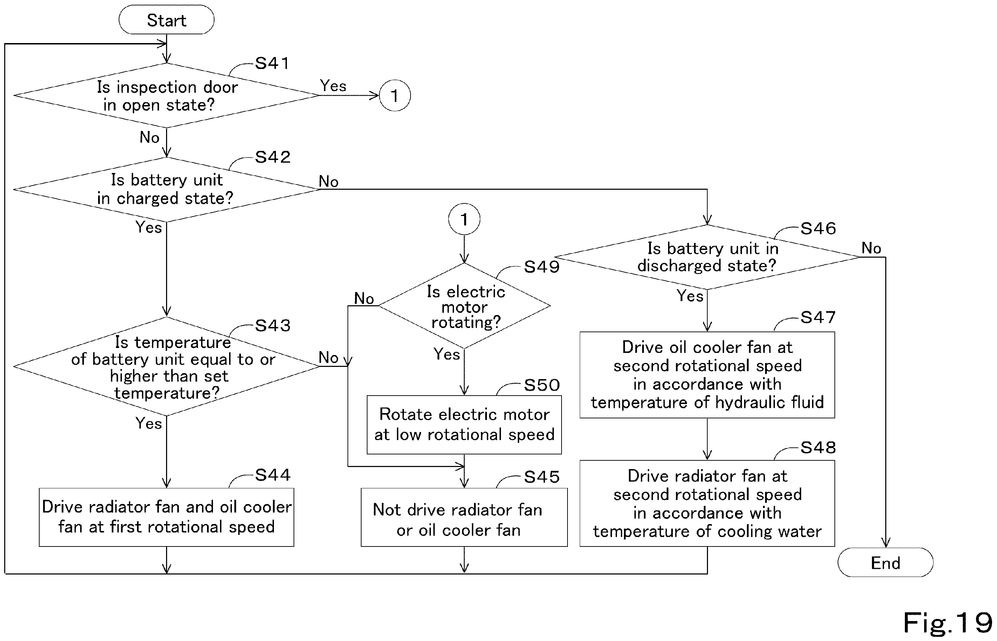

Control processing performed by the fan controller 120b (the controller 120) is described below with reference to FIG. 19. FIG. 19 is a flowchart illustrating the control processing according to the first variation. First, the fan controller 120b determines whether or not the inspection door 76 is in an open state based on a detection signal from the detector 128 (S41). In a case where the detection signal indicates a closed state, the fan controller 120b determines that the inspection door 76 is in a closed state (S41, No) and determines whether or not the BMU 123 is detecting a charged state (charging) of the battery unit 90 (S42).

In a case where the battery unit 90 is in the charged state (being charged) (S42, Yes), the fan controller 120b determines whether or not the temperature of the battery unit 90 detected by the BMU 123 is equal to or higher than a set temperature (S43). In a case where the temperature of the battery unit 90 is equal to or higher than the set temperature (S43, Yes), the fan controller 120b drives the radiator fan 94a and the oil cooler fan 97a at the first and second specified rotational speeds (S44).

In a case where it is determined in S43 that the temperature of the battery unit 90 is not equal to or higher than the set temperature (S43, No), that is, the temperature of the battery unit 90 is less than the set temperature, the fan controller 120b does not drive the radiator fan 94a or the oil cooler fan 97a (S27).

In a case where it is determined in S42 that the battery unit 90 is not in the charged state (being charged) (S42, No), the fan controller 120b determines whether or not the battery unit 90 is in a discharged state (being used) (S46). In a case where the battery unit 90 is in the discharged state (being used) (S46, Yes), the fan controller 120b drives the oil cooler fan 97a at the second target rotational speed based on the temperature OT of the hydraulic fluid detected by the fluid temperature detector 127 and the storage table DT2 (or the storage table DT3) stored in the storing unit 121 (S47). The fan controller 120b drives the radiator fan 94a at the first target rotational speed based on the temperature RT of the cooling water detected by the water temperature detector 126 and the storage table DT1 stored in the storing unit 121 (S48).

In a case where the detection signal indicates an open state in S41, the fan controller 120b determines that the inspection door 76 is an open state (S41, Yes) and determines whether or not the electric motor 91 is rotating (S49). For example, in a case where the rotational speed controller 120c sets the rotational speed of the electric motor 91 to a rotational speed other than "zero", the fan controller 120b determines that the electric motor 91 is rotating (S49, Yes). In a case where it is determined that the electric motor 91 is rotating (S49, Yes), the fan controller 120b rotates the electric motor 91 at a rotational speed (e.g., 500 rpm) lower than usual (S50). In a case where it is determined that the electric motor 91 is not rotating (S49, No) or after the process in S50, the fan controller 120b proceeds to the process in S45.

The fan controller 120b returns to the process in S41 after S44, S45, or S48.

In a case where it is determined in S46 that the battery unit 90 is not in a discharged state (being used) (S46, No), the fan controller 120b ends this processing.

In the swivel working machine 1 according to the first variation, in a case where an open state of the inspection door 76 is detected by the detector 128, the controller 120 drives the electric motor 91 at a rotational speed lower than that in a case where the inspection door 76 is in a closed state. With this configuration, in the open state of the inspection door 76, electric power consumption of the electric motor 91 can be made smaller than that in a case where the inspection door 76 is in a closed state. It is therefore possible to efficiently use electric energy.

In the swivel working machine 1, in a case where the open state of the inspection door 76 is detected by the detector 128, the controller 120 stops rotation of the radiator fan 94a and the oil cooler fan 97a. With this configuration, inspection can be performed in a state where rotation of the radiator fan 94a and the oil cooler fan 97a is stopped, and electric power consumption of the radiator fan 94a and the oil cooler fan 97a can be set to zero. It is therefore possible to efficiently use electric energy.

### <Second Variation>

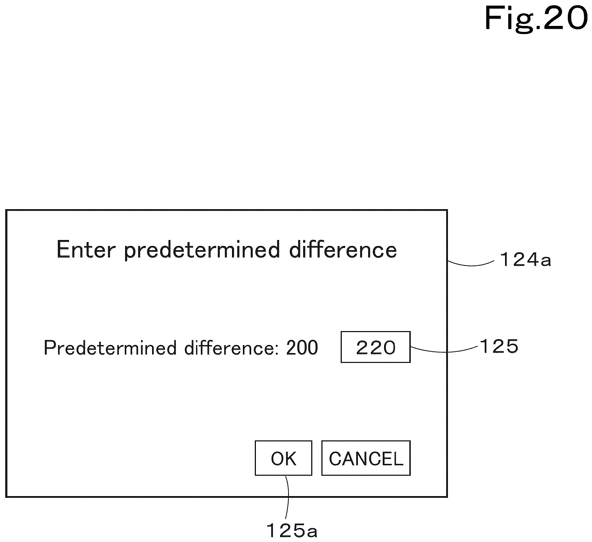

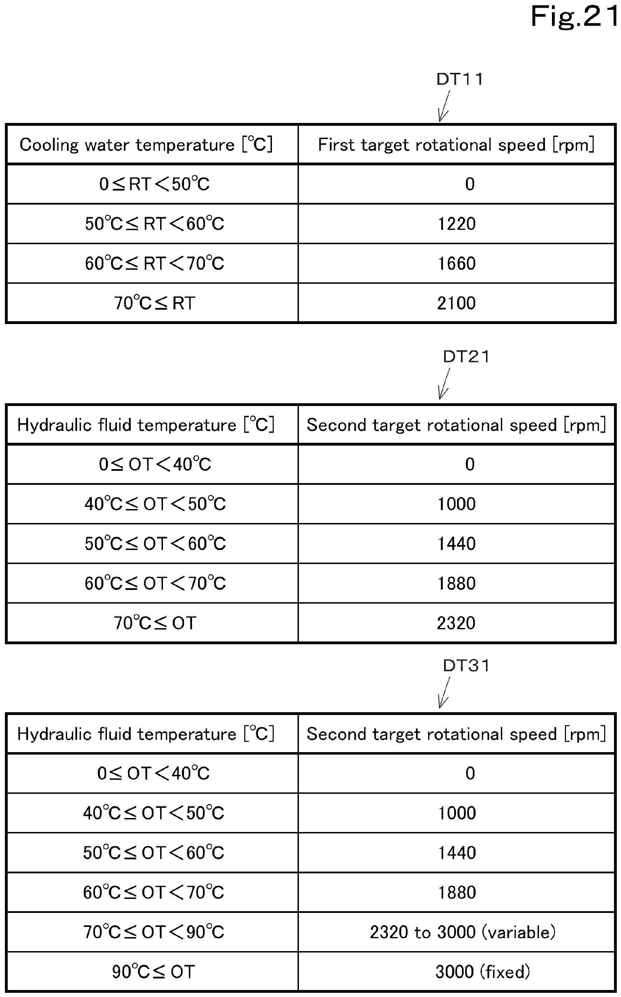

A second variation is described. The swivel working machine 1 according to the second variation can change a predetermined difference (e.g., 200 rpm) between the first target rotational speed of the radiator fan 94a and the second target rotational speed of the oil cooler fan 97a. FIG. 20 illustrates an example of a screen for changing the predetermined difference. FIG. 21 illustrates changed storage tables DT1, DT21, and DT31 stored in the storage. Specifically, the controller 120 causes the screen for changing the predetermined difference illustrated in FIG. 20 to be displayed on the display 124a when a setting change button displayed on the display 124a is operated. As illustrated in FIG. 20, the display 124a displays the screen for changing the predetermined difference including a currently-set value (e.g., 200 rpm) of the predetermined difference, a message "Enter predetermined difference", and a receiver 125 that receives an instruction to change the predetermined difference to a changed predetermined difference larger than the default predetermined difference (e.g., 200 rpm). The receiver 125 receives an entered value in a case where the entered value is larger than the default predetermined difference (e.g., 200 rpm) and equal to or smaller than an upper limit value (e.g., 300 rpm). On the other hand, the receiver 125 does not receive an entered value in a case where the entered value is less than the default value (e.g., 200 rpm) and in a case where the entered value is larger than the upper limit value (e.g., 300 rpm). It is assumed here that, for example, 220 rpm has been entered and received as the changed predetermined difference.

The fan controller 120b causes the changed DT11 (see FIG. 21) in which the first target rotational speed and the second target rotational speed have been changed to values having the changed predetermined difference (e.g., 220 rpm) received by the receiver 125 to be stored in the storing unit 121. The fan controller 120b creates the changed storage tables DT11 and DT21 by changing the second target rotational speed other than a standard second target rotational speed (e.g., "1000 rpm") in the temperature range "40°C ≤ OT < 50°C" of the hydraulic fluid and the first target rotational speed to values having the changed predetermined difference (e.g., 220 rpm).

For example, as illustrated in FIG. 21, the changed storage table DT11 is a table in which a predetermined correspondence relationship between a temperature range of the cooling water and the first target rotational speed of the radiator fan 94a changed based on the changed predetermined difference (e.g., 220 rpm) is stored. Specifically, in the storage table DT11, the temperature range "50°C ≤ RT < 60°C" of the cooling water and the changed first target rotational speed (e.g., "1220 rpm") are associated, the temperature range "60°C ≤ RT < 70°C" of the cooling water and the changed first target rotational speed (e.g., "1660 rpm") are associated, and the temperature range "70°C ≤ RT" of the cooling water and the changed first target rotational speed (e.g., "2100 rpm") are associated. In the changed storage table DT11, no change is made as for the temperature range "0°C ≤ RT < 50°C" of the cooling water since the first target rotational speed is "0 rpm".

As illustrated in FIG. 21, the changed storage table DT21 is a table in which a predetermined correspondence relationship between a temperature range of the hydraulic fluid and the second target rotational speed of the oil cooler fan 97a changed based on the changed predetermined difference (e.g., 220 rpm) is stored. Specifically, in the changed storage table DT21, the temperature range "50°C ≤ OT < 60°C" of the hydraulic fluid and the changed second target rotational speed (e.g., "1440 rpm") are associated, the temperature range "60°C ≤ OT < 70°C" of the hydraulic fluid and the changed second target rotational speed (e.g., "1880 rpm") are associated, and the temperature range "70°C ≤ OT" of the hydraulic fluid and the changed second target rotational speed (e.g., "2320 rpm") are associated. In the changed storage table DT21, no change is made as for the temperature range "0°C ≤ OT < 40°C" of the hydraulic fluid since the second target rotational speed is "0 rpm", and no change is made as for the temperature range "40°C ≤ OT < 50°C" of the hydraulic fluid since the second target rotational speed (e.g., "1000 rpm") is used as a standard.

Note that although the second target rotational speed (e.g., "1000 rpm") in the temperature range "40°C ≤ OT < 50°C" of the hydraulic fluid of the storage table DT21 is used as a standard, this does not imply any limitation. For example, the first target rotational speed (e.g., "1220 rpm") in the temperature range "50°C ≤ RT < 60°C" of the cooling water of the storage table DT11 may be used as a standard.

As illustrated in FIG. 21, the fan controller 120b specifies the first target rotational speed (i.e., the changed first target rotational speed) based on the temperature detected by the water temperature detector 126 and the changed storage table DT11 and specifies the second target rotational speed (i.e., the changed second target rotational speed) based on the temperature detected by the fluid temperature detector 127 and the changed storage table DT21.

Note that the fan controller 120b may store, in the storing unit 121, changed arithmetic expressions in which the first target rotational speed and the second target rotational speed have been changed to values having the changed predetermined difference (e.g., 220 rpm) received by the receiver 125, specify the first target rotational speed based on the temperature detected by the water temperature detector 126 and the changed arithmetic expression, and specify the second target rotational speed based on the temperature detected by the fluid temperature detector 127 and the changed arithmetic expression.

Furthermore, the fan controller 120b changes the first specified rotational speed (e.g., 800 rpm) to a changed first specified rotational speed (e.g., 780 rpm) having the changed predetermined difference (e.g., 220 rpm) and changes the second specified rotational speed to a changed second specified rotational speed (e.g., 560 rpm) having the changed predetermined difference (e.g., 220 rpm) from the changed first specified rotational speed (e.g., 780 rpm). Accordingly, in a case where the BMU 123 is detecting the charged state (charging) of the battery unit 90, the fan controller 120b rotates the radiator fan 94a at the predetermined changed first specified rotational speed (e.g., 780 rpm) and rotates the oil cooler fan 97a at the predetermined changed second specified rotational speed (e.g., 560 rpm).

The swivel working machine 1 according to the second variation can flexibly prevent whine noise since the controller 120 changes at least one of the storage table DT1 (first data) and the storage table DT2 (second data) stored in the storing unit 121 in response to a changing instruction received by the receiver 125.

The controller 120 includes the receiver 125 that receives an instruction to change the predetermined difference to a changed predetermined difference larger than the default predetermined difference (e.g., 200 rpm), and the controller 120 stores, in the storing unit 121, the changed storage tables DT11 and DT21 (or DT31) or changed arithmetic expressions in which the first target rotational speed and the second target rotational speed have been changed to values having the changed predetermined difference received by the receiver 125, specify the first target rotational speed based on the temperature detected by the water temperature detector 126 and the changed storage tables DT11 and DT21 (or DT31) or the changed arithmetic expressions, and specify the second target rotational speed based on the temperature detected by the fluid temperature detector 127 and the changed storage tables DT11 and DT21 (or DT31) or the changed arithmetic expressions.

According to the second variation, the predetermined difference can be changed to the changed predetermined difference (e.g., 220 rpm) larger than the predetermined difference (e.g., 200 rpm), and whine noise that cannot be prevented by the predetermined difference (e.g., 200 rpm) can be prevented. Furthermore, since the predetermined difference is changed to the changed predetermined difference (e.g., 220 rpm) larger than the predetermined difference (e.g., 200 rpm), it is possible to prevent the predetermined difference from being changed to a changed predetermined difference smaller than the predetermined difference (e.g., 200 rpm), and it is possible to prevent whine noise from being generated due to erroneous change of the predetermined difference.

Although an example in which the present invention is applied to a swivel working machine such as a backhoe has been described in the above embodiment and variations, a target to which the present invention is applied is not limited to this, and the present invention may be applied to other construction machines such as a wheel loader, a compact track loader, and a skid-steer loader or may be applied to agricultural machines such as a tractor, a combine, a rice planter, and a lawn mower. That is, the present invention can be applied to various working machines.

Although the first to-be-cooled target is the radiator 94 and the second to-be-cooled target is the oil cooler 97 in the above embodiment and variations, this does not imply any limitation. For example, the first to-be-cooled target may be the oil cooler 97 and the second to-be-cooled target may be the radiator 94 or the first to-be-cooled target and the second to-be-cooled target may be other units. Furthermore, the number of targets to be cooled may be three or more.

Although the first cooling fan is the radiator fan 94a and the second cooling fan is the oil cooler fan 97a in the above embodiment and variations, this does not imply any limitation. For example, the first cooling fan may be the oil cooler fan 97a and the second cooling fan may be the radiator fan 94a or the first cooling fan and the second cooling fan may be other fans. Furthermore, three or more cooling fans having predetermined target rotational speeds that are different from one another by a predetermined difference or more may be provided. It is also possible to employ a configuration in which a common target is cooled by the first cooling fan and the second cooling fan and these cooling fans are driven at rotational speeds having a predetermined difference or more. Even in this case, the controller 120 can prevent whine noise by simple fan control without the need to determine a difference between the target rotational speeds of the cooling fans. Furthermore, the first cooling fan and the second cooling fan may be attached to the same frame body or may be attached to different frame bodies.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

1 swivel working machine
2 swivel base
20 working device
30 oil cooler
30a oil cooler fan
35 support frame
70 exterior cover
73a air intake port
76 inspection door
77 exhaust portion
90 battery unit
91 electric motor
92b inverter
94 radiator (first to-be-cooled target)
94c water supply portion
94a radiator fan (first cooling fan)
97 oil cooler (second to-be-cooled target)
97a oil cooler fan (second cooling fan)
98 frame body
110 shroud
111 fixed portion
111 a upper edge portion
111b left edge portion
111d lower edge portion
111c right side portion
112 guide portion
112a downward inclined extension portion
112b right-side bent extension portion
113 first elastic support body
114 second elastic support body
115 first cutout portion
116 second cutout portion
120 controller
121 storing unit
123 BMU (detector, temperature detector)
126 water temperature detector (first temperature detector)
127 fluid temperature detector (second temperature detector)
128 detector
CU cooling unit
DT1,DT2,DT3 storage table
DT11,DT21,DT31 changed storage table
P hydraulic pump

## Claims

1. A working machine comprising:
a first cooling fan;
a second cooling fan;
a temperature detector to detect a temperature of a to-be-cooled target;
a storage and/or a memory to store first data defining a correspondence relationship between the temperature detected by the temperature detector and a first target rotational speed which is a target rotational speed of the first cooling fan, and second data defining a correspondence relationship between the temperature detected by the temperature detector and a second target rotational speed which is a target rotational speed of the second cooling fan; and
a controller to control a rotational speed of the first cooling fan to the first target rotational speed corresponding to the temperature detected by the temperature detector and control a rotational speed of the second cooling fan to the second target rotational speed corresponding to the temperature detected by the temperature detector; wherein
the second target rotational speed is set such that a difference between the second target rotational speed and the first target rotational speed is equal to or larger than a predetermined difference irrespective of the temperature detected by the temperature detector.

2. The working machine according to claim 1, wherein
the first cooling fan is provided to cool a first to-be-cooled target, and the second cooling fan is provided to cool a second to-be-cooled target different from the first to-be-cooled target;
the temperature detector includes:
a first temperature detector to detect a temperature of the first to-be-cooled target; and
a second temperature detector to detect a temperature of the second to-be-cooled target; and
the first data defines a correspondence relationship between the temperature detected by the first temperature detector and the first target rotational speed, and the second data defines a correspondence relationship between the temperature detected by the second temperature detector and the second target rotational speed.

3. The working machine according to claim 2, wherein
the first data is a storage table or an arithmetic expression in which the first target rotational speed is defined in advance for each of a plurality of temperature ranges of the first to-be-cooled target, and the second data is a storage table or an arithmetic expression in which the second target rotational speed is defined in advance for each of a plurality of temperature ranges of the second to-be-cooled target; and
the controller determines one of the temperature ranges of the first to-be-cooled target to which the temperature detected by the first temperature detector belongs, and rotates the first cooling fan at the first target rotational speed corresponding to the determined one of the temperature ranges and determines one of the temperature ranges of the second to-be-cooled target to which the temperature detected by the second temperature detector belongs and rotates the second cooling fan at the second target rotational speed corresponding to the determined one of the temperature ranges.

4. The working machine according to claim 3, wherein
the second data is defined such that the second target rotational speed continuously increases as the temperature detected by the second temperature detector increases with regard to one of the temperature ranges of the second to-be-cooled target to which the second target rotational speed higher than a maximum value of the first target rotational speed belongs.

5. The working machine according to claim 1, wherein
the first cooling fan and the second cooling fan are provided to cool a same to-be-cooled target.

6. The working machine according to any one of claims 1 to 5, further comprising:
a battery unit; and
a detector to detect whether the battery unit is in a charged state or in a discharged state; wherein
the controller, in a case where the detector is detecting the charged state of the battery unit, rotates the first cooling fan at a predetermined first specified rotational speed and rotates the second cooling fan at a predetermined second specified rotational speed differing by a predetermined difference or more from the first specified rotational speed.

7. The working machine according to claim 6, further comprising a temperature detector to detect a temperature of the battery unit; wherein
the controller, while the detector is detecting the charged state of the battery unit, rotates the first cooling fan at the first specified rotational speed and rotates the second cooling fan at the second specified rotational speed if the temperature of the battery unit detected by the temperature detector is equal to higher than a set temperature, and does not drive the first cooling fan or the second cooling fan if the temperature of the battery unit is less than the set temperature.

8. The working machine according to any one of claims 1 to 7, further comprising a cooling unit including a frame body, the first cooling fan and the second cooling fan attached side by side to one surface of the frame body, and a shroud surrounding the first cooling fan and the second cooling fan which are combined.

9. The working machine according to claim 8, wherein
the shroud includes a first elastic support body to support the first cooling fan and a second elastic support body to support the second cooling fan.

10. The working machine according to claim 9, wherein
the shroud is in a rectangular tube shape to surround both the first cooling fan and the second cooling fan, and includes a fixing portion including an upper edge portion, a left edge portion, a lower edge portion, and a right edge portion and a guide portion extending from the fixing portion outward toward an exhaust side and guides cooling air generated by driving of the first cooling fan and cooling air generated by driving of the second cooling fan;
the lower edge portion includes a first cutout portion in a portion to support the first cooling fan and a second cutout portion in a portion to support the second cooling fan; and
the first elastic support body is provided in the first cutout portion, and the second elastic support body is provided in the second cutout portion.

11. The working machine according to any one of claims 1 to 10, further comprising a receiver to receive an instruction to change the predetermined difference; wherein
the controller changes at least one of the first data or the second data stored in the storage and/or the memory in response to the instruction received by the receiver.

12. The working machine according to any one of claims 1 to 11, further comprising:
a working device to be driven by hydraulic pressure; and
a water cooling path to cool a to-be-cooled device by circulating cooling water;
wherein
the first cooling fan is a radiator fan to cool the cooling water, and
the second cooling fan is an oil cooler fan to cool hydraulic fluid to drive the working device.
